(19) Europäisches Patentamt
European Patent Office
Office européen des brevets

(11) **EP 2 242 011 A1**

(12) **EUROPEAN PATENT APPLICATION**

(43) Date of publication:
**20.10.2010 Bulletin 2010/42**

(51) Int Cl.:
***G06Q 10/00*** *(2006.01)*

(21) Application number: **10159688.0**

(22) Date of filing: **12.04.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(30) Priority: **15.04.2009 IT GE20090021**

(71) Applicant: **Universita' Degli Studi Di Genova**
**16126 Genova (IT)**

(72) Inventors:
- **Benza, Mauro**
  **16145 Genova (IT)**
- **Bersani, Chiara**
  **16145 Genova (IT)**
- **Giglio, Davide**
  **16145 Genova (IT)**
- **Sacile, Roberto**
  **16145 Genova (IT)**

(74) Representative: **Dini, Roberto et al**
**Metroconsult S.r.l.**
**Via Sestriere 100**
**10060 None (TO) (IT)**

(54) **Method for managing the distribution of products or goods.**

(57) The present invention relates to a method for managing the distribution of products or goods from at least one storchousc to a plurality of delivery points of a distribution network through at least one means of transportation within a predetermined planning time interval, said method being adapted to define the quantity of product to be delivered and the moment at which delivery must take place for each network point and comprising a step of classifying the network points in order to divide them into points for which delivery is established by the network manager, called PUSH points, and points for which delivery is autonomous, called PULL points.

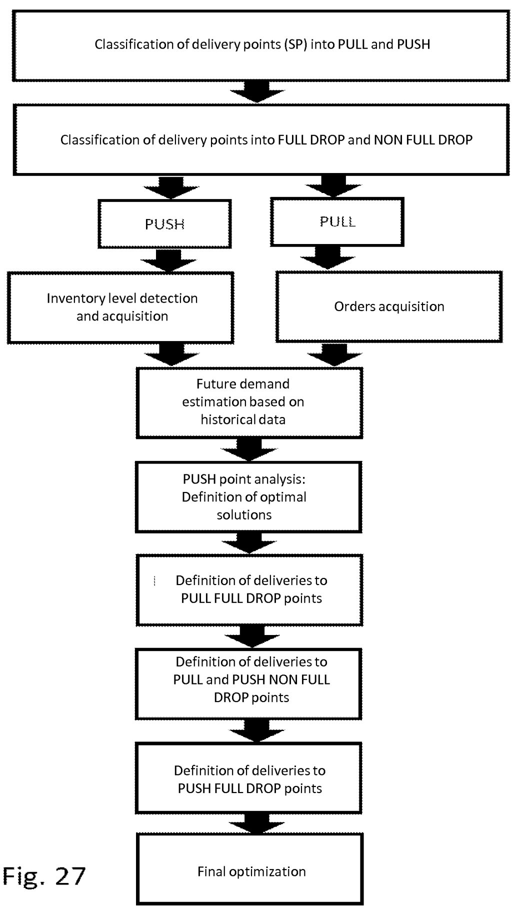


Fig. 27



Printed by Jouve, 75001 PARIS (FR)

## Description

The present invention relates to a method for managing the distribution of products or goods within a system which comprises at least one storehouse and a network of delivery points to be supplied, through means of transportation, with products taken from the storehouse.

It is well known that logistics is of vital importance in the distribution of products and goods in order to save on storage and delivery costs and to prevent the network's final points from getting out of stock.

The factors to be taken into account when planning deliveries are numerous and manifold: for example, the network's delivery points are spread over the territory in an irregular manner, and each of them may have its own peculiarities which affect the generation of restocking orders carried out by the storehouse.

The purpose of planning is to maximize the efficiency of the system consisting of the storehouse, the network of points to be restocked, and resources such as means of transportation and human resources, while at the same time minimizing costs and maximizing profits; it can therefore be stated that distribution logistics has strong implications for a company's financial functions as well as for its production and marketing functions.

The problem to be tackled in these cases also includes the so-called "routing", i.e. determining the routes that the means of transportation will follow to supply the various delivery points, as well as determining the supply policies, i.e. choosing how the delivery points will have to be served by privileging certain aspects over others.

In general, the distribution logistics problem has been dealt with by several authors in the scientific literature aiming at optimizing the generation of restocking orders for the network's delivery points.

A brief introduction to some of the newest methods will now be provided, which will be useful to understand how this problem has been tackled and solved by the prior art.

In 2002, Bertazzi, Paletta and Speranza described in the article entitled "Deterministic order-up-to level policies in an inventory routing problem" (published in 2002 in the Transportation Science journal, vol. 36) a proposal according to which a series of simplifications are used in order to attain good results in the distribution of products to a network of delivery points: for example, they assume that a single vehicle is available which has a limited transportation capacity, and associate a minimum and a maximum inventory levels with each network's delivery point. The proposed method employs a heuristic approach to determine the product distribution route based on a restocking policy according to which the goods are re-ordered until a minimum inventory level is reached at each delivery point.

Another example is provided by Campbell and Savelsbergh's proposal described in the article "A decomposition approach for the inventory-routing problem" published in the Transportation Science journal, vol. 38, in 2004, wherein the authors subject some of the initial hypotheses to Lagrangean relaxation (i.e. a per se known technique in the field of combined problem solution, which, in short, consists in preliminarily eliminating a part of the problem constraints and entering the latter into the target function in a manner such that they are taken into account indirectly in the solution of the relaxed problem) by assuming not only that the inventory usage rate at the delivery points is deterministic and known a priori, but also that there is unlimited availability of product at the storehouses and, finally, that deliveries are not limited by time windows; furthermore, the proposal only takes into consideration the costs connected to the distribution activity.

A common drawback of the known methods is that they do not take into account some parameters which affect the final result, or make a rough simplification of the effect or variability of other parameters, with the consequence that such methods, although usable to approximate a good solution to the problem, cannot provide the optimal solution in the actual operating conditions of the system.

Moreover, the problem of distribution logistics optimization is solved by some known methods through a first step of grouping the delivery points to be served according to different criteria, such as geographical position, demand rate or service frequency, thereby creating multiple groups of delivery points which will be served by the same means of transportation; for each group, the route of the means of transportation that will deliver the product is then determined.

Such a grouping involves an unacceptable simplification from the viewpoint of distribution efficiency, since it excludes a priori a certain number of solutions which, though optimal, are not congruent with the grouping criteria, which imply the subdivision of the delivery points into groups sharing the characteristic of having to be supplied by the same means of transportation.

A common approach of the methods known in the art, called Retail Management Inventory (RMI), assumes, as an initial simplified hypothesis, that the restocking of the delivery points is chosen on the basis of orders issued by the delivery point managers, thus simplifying the distribution logistics and reducing the computational load; in practice, a simplification is introduced which makes all of the network's delivery points equal to one another, at least as regards the determination of the quantity of product to be supplied.

Although it actually reduces the computational load, this simplified assumption does not allow the mathematical modelling to effectively approximate the real system, in which the network includes both delivery points that are managed autonomously by their manager and delivery points managed in a centralized manner: the main difference between these two types of delivery points is that in the former case it is necessary to meet the manager's requirements independently of whether the quantity of product ordered is sufficient or not to prevent a stock-out, i.e. the warehouse running out of product, whereas in the latter case it is necessary to deliver a quantity of product which prevents a stock-out from occurring while being congruent with sales forecasts.

The present invention aims at providing a method for managing the distribution of products or goods to a network of delivery points which can overcome these drawbacks; this object is achieved by a method according to the first one of the claims appended to the present description.

The method of the present invention is based on the idea of planning deliveries by making a first classification of the network's delivery points and a subdivision thereof into two different categories: those which manage their inventory directly and issue an order where they define the required product quantity and when it must be delivered (called PULL points), and those wherein the inventory level is monitored remotely by the distribution control system, which decides how much product is to be delivered and when on the basis of data received about the inventory status and the estimated demand for that specific product (called PUSH points).

Once this first classification has been made, the points are classified again for a second time: the points for which the quantity of product to be supplied equals the delivery capacity of a means of transportation, called FULL DROP points, are discriminated from those points which require a smaller quantity of product than the capacity of a means of transportation, called NON FULL DROP points.

For this purpose, as will be seen, the inventory status of the delivery points directly managed by the control system (PUSH) is also monitored in real time; for these points, a forecast is made as regards their future product demand, and deliveries are planned by observing the constraint that the orders issued by the managers of the so-called PULL points must be carried out as well.

In addition to the quantity of product to be delivered, the method of the invention also provides the mode of transportation thereof, i.e. the number of fleet vehicles to be used, the specific distribution routes, and the definition of the sequence of delivery points to be visited by each vehicle during each tour.

The approach of the method according to the present invention allows to attain a distribution logistics which represents an improvement over those normally attainable through prior-art methods; in fact, the system's approximation is extremely realistic, thus allowing for optimal planning: in particular, the method allows to minimize transportation costs, equalize the fleet mileage on each planning day, and equalize the quantity of product issued from the storehouses on each planning day, so as to avoid any demand peaks or days of low fleet utilization.

Further advantageous features of the method will be set out in the appended claims. These features as well as further advantages of the present invention will become apparent from the following description of an embodiment thereof as shown in the annexed drawings, which are supplied by way of non-limiting example, wherein:

- Fig. 1 shows a diagram of a network of delivery points and a storehouse to which the method according to the present invention is applicable;
- Fig. 2 shows a diagram of the first step of the method according to the present invention;
- Fig. 3 shows a diagram of the second step of the method according to the present invention;
- Figs. 4 to 9 show the steps of a first embodiment of the method according to the present invention;
- Figs. 10 to 26 show the steps of a second embodiment of the method according to the present invention;
- Fig. 27 shows a flow chart of the method according to the present invention.

Referring now to Fig. 1, there is shown a generic network of points to which the present method is applicable: it comprises a storehouse 1 where the products or goods to be distributed to the delivery points 2-12 are stored.

The latter may be, for example, filling stations belonging to a network managed by an oil company; the delivery points are classified and subdivided into PUSH points 2,3,4,5,6,7,8, the restocking of which is planned in a centralized manner (i.e. decided by the control station 13), and PULL points 9,10,11,12, the restocking of which is decided by the managers of the points themselves.

This classification of the sales points and their distinction into two PUSH and PULL groups will be used for planning the deliveries, as will be described in detail later on.

After the first classification into PUSH and PULL points has been made, a second subdivision and classification of the delivery points 2-12 is carried out in order to subdivide them into so-called FULL DROP points, i.e. those points for which the quantity of product is such that it takes up the whole capacity of the means of transportation to be used for delivering the product, and NON FULL DROP points, i.e. those points for which the quantity of product to be delivered is smaller than the maximum capacity of the means of transportation, as shown synthetically in the block diagram or flow chart of Fig. 27.

The products are transported from the storehouse 1 to the various network's delivery points 2-12 through one or more means of transportation, e.g. motor vehicles, which follow a course or route chosen by the method of the present invention for supplying one or more points 2-12.

The method according to the present invention provides for monitoring the inventory level of the PUSH points 2-8: this can be attained manually, for example, through a report written by the sales point manager or, alternatively, according to a preferred version, it may be monitored electronically; for example, when the product is a liquid accumulated in tanks at the network points, level sensors may be used for detecting the residual level of the product in the tank; this condition is to be preferred, since it allows the inventory level at each point to be monitored in real time without needing the manager's intervention, thus always providing up-to-date data reflecting the actual situation of the system.

For said delivery points 2-8, an estimate of the future demand is also made on the basis of historical sales data pertaining to a specific product for every single sales point 2-8. The PULL delivery points 9-12, instead, issue orders specifying the desired product and quantity thereof for each planning day.

The method according to the present invention requires the execution of at least two distinct steps: first, the entire set of network's delivery points to be served is taken into consideration and an optimization problem is tackled in order to obtain a set of solutions, which are then rationalized in order to generate a solution which meets further constraints and objectives of the system.

The following will describe in more detail the two steps of the method: in the first step, the method provides for tackling a number of problems matching the number of single PUSH delivery points; this first step aims at minimizing inventory and transportation costs by optimizing the fleet utilization.

In particular, this first step generates, for each single PUSH sales point 2-9, a set of possible optimal solutions that determine the quantities of product to be served and the interval, within the planning horizon, in which every delivery should take place, while at the same time observing the constraint that the orders issued by the PULL points must be carried out as well.

The second step of the method first fulfills the deliveries to the PULL delivery points and then, for each PUSH point, it chooses (according to a heuristic criterion) one of the deliveries planned during the previous step by taking into account the needs of minimizing the transportation costs, equalizing the mileage travelled during the planning time horizon, and equalizing the quantity of product issued from the storehouse during the planning time horizon.

In this step, for each day of the planning time horizon an optimal-cost solution is determined which combines the deliveries chosen in the previous step for the PUSH delivery points 2-8 with the deliveries for the PULL delivery points 9-12 in compliance with the resource constraints, i.e. the number of vehicles available on each day, the maximum weight and volume of product which can be transported by the single vehicles and the maximum service time of each vehicle.

This procedure generates, for each day of the week, the orders for the PUSH delivery points 2-8 by associating one of the solutions obtained in the first step with the deliveries imposed by the PULL delivery points 9-12, thus generating actual orders for the PUSH delivery points 2-8 at a lower cost while defining the route to be followed by the vehicles in order to serve all delivery points.

More in detail, the second computational step of the method comprises four sub-steps, i.e.:

sub-step 1: mandatory deliveries to PULL FULL DROP points are first allocated for the entire time horizon taken into account: to this end, the deliveries to said delivery points are carried out by using dedicated vehicles on direct, dedicated trips;

sub-step 2: the deliveries to PUSH and PULL type NON FULL DROP points 2-12 are managed simultaneously: these delivery points will be served by means of shared tours with multiple visits; to this end, the vehicle is loaded at the storehouse with a quantity of product equal to the sum of all deliveries to be made to the planned delivery points; the tour starts from the storehouse, the planned delivery points are visited, and then the vehicle returns to the storehouse. In this sub-step, for the PUSH delivery points 2-8 all the solutions generated in step 1 of the method are taken into consideration, whereas for the PULL delivery points the deliveries are defined in accordance with the orders received from the respective managers.

The order in which the deliveries to the delivery points are allocated in this sub-step 2 is defined through a route calculated beforehand, which generates the sequence of delivery points to be taken into consideration by calculating the cheapest route for visiting all the delivery points of the system only once;

sub-step 3: the deliveries to the PUSH FULL DROP delivery points 2-8 are established, for which dedicated vehicles are used on direct trips by taking into account all the solutions generated in the previous step and choosing those solutions which, when integrated into the planning generated so far, can minimize the transportation costs, equalize the mileage travelled by the fleet on each planning day, and equalize the quantity of product issued from the storehouses on each planning day, so as to avoid any demand peaks or days of low fleet utilization;

sub-step 4: adjusting the deliveries in order to optimize the utilization of the vehicles' capacity.

In this way, the generation of different solutions for each PUSH delivery point is flexible and advantageously allows to produce optimal solutions in the initial planning steps, among which the final solution can then be chosen.

It should also be noted that in the second step targets are minimized which are not normally taken into account by prior-art techniques; for example, the mileage travelled by the fleet and the quantity of product issued from the storehouses on each planning day are equalized so as to avoid any demand peaks or days of low fleet utilization, thereby allowing to optimize the usage of the means of transportation.

Note that the method according to the present invention takes into consideration the whole system, without making any preliminary simplification as to the delivery points; instead, they are initially classified and grouped depending on their type (PUSH or PULL) and then, based on the estimated quantity of product to be delivered and on the capacity of the means of transportation, they are further classified and subdivided into two additional categories (FULL DROP or NON FULL DROP): this allows to first tackle an optimization problem that provides a set of optimal solutions for the entire scenario, and subsequently to choose the best solution among those solutions already identified as possible optimal solutions.

It must be pointed out that, although the planning extends over a time horizon T, it is carried out every day in accordance with the "rolling horizon" technique, which allows to accurately plan deliveries on a daily basis by taking into account any changes due to future requirements.

The route or course of the means of transportation is defined by means of a so-called "giant tour", which generates the sequence of delivery points by calculating the cheapest route for visiting all delivery points only once.

A flow chart of the method according to the above description is shown in Fig. 27, wherein, for simplicity, some steps have been consolidated together.

Below a detailed description of the calculations carried out during the execution of the aforementioned first and second steps is provided, wherein SP refers to the end point and:

*Sets, indexes and parameters:*

| | |
|---|---|
| *SND* | set of PUSH NON FULL DROP points |
| *SFD* | set of PUSH FULL DROP points |
| *LND* | set of PULL NON FULL DROP points |
| *LFD* | set of PULL FULL DROP points |
| *S* | set of PUSH points S = $SNF \cup SFD$ |
| *L* | set of PULL points $L = LNF \cup LFD$ |
| *FD* | set of FULL DROP points FD = SFD ∪ LFD |
| *NF* | set of NON FULL DROP points NF = SNF ∪ LNF ordered by a single distribution route. |
| *V* | set of points $V = S \cup L$, with cardinality N |
| i | i=1..N, index of SP |
| t | t=1..T-1, index relating to the *t-th* time interval [t, t+1), hereafter expressed in days, where t=1 is "today" |
| p | p=1..P type of product served to each SP |
| z | z=1...Z number of optimal or sub-optimal solutions generated by step 1 for each PUSH SP |
| $C_i$ | transportation cost for reaching the *i-th* point from the storehouse and returning to the storehouse (round trip from storehouse to SP) |
| $\mu i$ | represents a parameter for limiting the maximum quantity of product to be stocked at the *i-th* point, expressed as a percentage of the demand for each day |
| | represents a parameter for limiting the maximum quantity of product to be stocked at the *i-th* point, expressed as a percentage of the stocking capacity of the point (inventory capacity) |
| | represents a parameter for ensuring a minimum quantity of product to be stocked at the *i-th* point, expressed as a percentage of the stocking capacity of the point (inventory capacity) |
| $UST_i^p$ | stocking or inventory capacity of the *i-th* point for the *p-th* product. |
| *CAP* | capacity of each *k-th* vehicle |
| $\alpha, \beta, \gamma, \varepsilon$ | parameters used for *balancing* the components of the target function. |

*Decision and status variables:*

| | |
|---|---|
| $w_i^{z,p}(t)$ | decision variable that defines the quantity of p-th product to be served to the i-th point within the interval [t; t + 1), *with t = 1,..,T* defined for the solution z, z∈ [1..Z]. In the model, for t=1, this variable is an input variable, because it is defined by the generation of the orders carried out on the previous day. |
| $\delta_i^z(t)$ | whole decision variable that represents the number of vehicles used for serving the i-th PUSH point defined for the solution z, z∈ [1..Z], within the interval [t; t + 1), with [0,1] for *i* SND, for *i* SFD |

(continued)

| | |
|---|---|
| $x_i^{z,p}(t)$ | status variable associated with the current inventory level of the *i-th* point, for the *p-th* product*, p = 1,.., P ,* at the beginning of the current day t, t=1..T (where t=1 is "today", planning day) as generated by the solution *z*, *z*∈ [1..*Z*]. |

*Additional variables:*

| | |
|---|---|
| $CML_i^p$ | "current measured level" represents the current inventory level for the *p-th* product at the *i-th* point at the beginning of each day, and depends on data acquired by the electronic devices adapted to monitor the inventory levels in the warehouses of the PUSH points. |
| $d_i^p(t)$ | estimated demand for the *p-th* product at the *i-th* SP within the *t-th* interval |
| $ord_i^p(t)$ | actual orders received from the *i-th* PULL points for the *p-th* product in the *t-th* interval. For t=1, the orders are known and must be carried out on the current day; for t=2, the orders are known and must be carried out on the next day; for t≥3, the orders are estimated. |
| vehSmax(i) | represents the maximum number of means of transportation for serving the *i-th* PUSH point. |
| *veh_max* | represents the maximum number of means of transportation used on each day in order to complete the entire distribution process. |

Formulation of the first step

It is assumed that each i-th point has a warehouse for stocking each p-th product. The fleet includes enough means of transportation to carry out the deliveries planned on each day, but each means of transportation can run for a maximum time defined by the work shift (e.g., 8 hours a day) and can make more than one trip.

In the first step, the problem is broken up into N independent problems, one for each i-th SP, in order to find a certain number Z of optimal/sub-optimal lowest-cost solutions for restocking the point's warehouse within the time horizon T. The data given by the algorithm is based on:

- real-time acquisition of the data concerning the quantity of product currently present in the warehouses of each point (hereafter referred to as "inventory level");
- estimated demand associated with each SP for each specific product.

In this first step, vehicle routing is not taken into account, i.e. the routes actually created for the means of transportation, because each point is considered separately and served in a dedicated manner. Likewise, it is assumed that the number of vehicles in the fleet is sufficient to accomplish the possible delivery combinations generated.

The data given by the first step of the algorithm generates different optimal and sub-optimal solutions which define:

- the quantity of each product to be served, and
- the moment at which each PUSH point must be served.

With reference to Fig. 2, the input variables relate to:

$x_i^p(t)$ : status variable associated with the current inventory level of the i-th point, for the p-th product, at the beginning of the current day t, where t=1 is "today", i.e. the planning day;

$\tilde{d}_i^p(t)$ : estimated demand for the p-th product, *p = 1,..,P* , at the i-th point for day t, with *t = 1,..,T* calculated by using a demand estimation module based on historical sales data acquired from that specific point.

set of orders $ord_i^p(t)$ of the generic i-th PULL point for the p-th product, *p = 1,..,P ,* as actually received or forecast according to a future order estimation module. In fact, PULL points often issue orders only for the day after the planning day, whereas the orders for the subsequent days of the time horizon T must be estimated according to an estimation module based on the service frequency of each point.

set of orders $ord_i^p(1)$ of the generic i-th PUSH point for the p-th product, $p = 1,..,P,$ as generated by the proposed algorithm for automatically generating the orders according to the planning generated on the previous day.

Within the algorithm, the estimated demand is calculated on the basis of historical sales or consumption data of the specific products at the end points; in particular, it is calculated as an average value of the quantity of product sold on the same day in the previous four weeks. Likewise, the forecast of the orders for the days after the first one is based on historical data relating to the frequency and quantity of orders requested in the past at each point.

The output decision variables of the algorithm are the following:

- $\delta_i^z(t)$: whole decision variable representing the number of vehicles used for serving the i-th point and defined for the solution z on day t, with $t = 2,..,T$ ;
- $w_i^{z,p}(t)$: decision variable defining the quantity of p-th product $p = 1,..,P,$ for the solution z, to be served to the i-th SP on day t, with t=2..T;

These decision variables are of course already defined for day t=1, i.e. the planning day, since the algorithm generated them on the previous day.

In this first step, the general objective is to minimize transportation costs - under the exemplificative assumption that transportations are dedicated to both PUSH and PULL points - and the number of vehicles used in the distribution process.

The imposed constraints are:

- preventing stockouts (running out of product) at the PUSH points
- fulfilling orders of PULL points (both the real ones issued for the day after the first one and the estimated ones for the remaining days of the planning horizon)
- capacity constraints for vehicles and warehouses of PUSH points.

Inventory minimization is not explicitly expressed in the target, but appears in many principal constraints of the model. By applying a "rolling horizon" system as the one described above (per se known), the first step calculates the planning of deliveries for the days t=2..T, but then the algorithm is applied again on each planning day after the inventory and demand data has been updated.

The target function minimizes:

- the transportation cost associated with the deliveries to the PUSH FULL DROP (SFD) and NON FULL DROP (SND) points based on the cost $C_i$ required for reaching the point from the storehouse and then returning to the storehouse.
- the maximum number of vehicles used for serving the PUSH points in all the possible solutions generated.
- the number of vehicles used for carrying out the orders of the PULL points.
- the maximum number of vehicles used daily in order to carry out all scheduled deliveries.

Constraint (A)

$$\min\begin{pmatrix} \alpha * \sum_{t=2}^{T-1}\sum_{z=1}^{Z}\sum_{i\in SND} C_i\delta_i^z(t) + \beta * \sum_{t=2}^{T-1}\sum_{z=1}^{Z}\sum_{j\in SFD}^{J} C_j\delta_j^z(t) + \\ \gamma * \sum_{i\in S}^{I} vehS\max(i) + \varepsilon * veh_\max \end{pmatrix}$$

where α, β, y and ε are parameters used for balancing the components of the target function. This balance may be defined by the decision-maker according to subjective or economical evaluations.

The first addend represents the total transportation cost as a sum of the economical transportation costs Ci multiplied by the number of vehicles $\delta_i^z(t)$ used for carrying out the deliveries to the SFD and SND points, respectively, in all the possible solutions z generated. The transportation cost is proportional to the distance travelled by the vehicle to reach the i-th end point and return to the storehouse, based on the simplified hypothesis that each delivery is made on a dedicated trip.

As a matter of fact, this would only be true for serving the PUSH FULL DROP (SFD) points of the first addend, not for serving the NON FULL DROP (SND) points of the second addend. However, if the average number of stops required for visiting the NON FULL DROP points is known, the parameter β can be set to weigh and evaluate this approximation.

The third addend minimizes the sum of the maximum number of vehicles used for making the deliveries scheduled for each specific PUSH point on the days t=2...T added together for all possible solutions Z under the constraint (B) illustrated below.

In practice, this set of constraints is useful for finding optimal or sub-optimal solutions for scheduling the deliveries on the various planning days.

The last addend, i.e. the fourth one, minimizes the total number of vehicles used for serving all the end points included in the whole planning, as calculated under the constraint (C).

Constraint (B)

$$\sum_{z=1}^{Z} \delta_i^z(t) < \text{vehSmax}\ (i)$$

$$i \in S$$

$$t = 2,..,T-1$$

The set of constraints in (C) calculates the number of vehicles used on the t-th day for making the deliveries scheduled in the current week for the whole set of points, further added together for all possible solutions generated for the PUSH points.

In the sum expressed in (C), the number of vehicles used for serving the NON FULL DROP (NFD) end points is weighed by the parameter ( <=1), since NON FULL DROP (NFD) end points are always served through shared, non-dedicated tours. Constraint (C)

$$veh_day(t) = \sum_{z=1}^{Z} \sum_{i \in SFD} \delta_i^s(t) + \sum_{i \in LFD} \delta_i^s(t) + \theta * \left( \sum_{z=1}^{Z} \sum_{i \in SND} \delta_i^s(t) + \sum_{j \in LND} \delta_l(t) \right)$$

$$t = 1,..,T\text{-}1$$

In the following constraint (D), the total number of vehicles used for the daily planning is defined to be smaller than the sum of the maximum number of vehicles used for the distribution process and the number of "allowed" vehicles ( *veh_allowed* ).

Constraint (D)

$$veh_day(t) \leq veh_max + veh_allowed$$

The parameter *"veh_allowed"* can be set by the user to force or relax the constraint (D). In fact, a high value of *"veh_allowed"* allows the problem to be subdivided into independent sub-problems for each end point for the purpose of reducing the complexity of the whole problem.

The following constraints define the warehouse status dynamics at the PUSH points. The quantity of p-th product at the i-th PUSH point at the beginning of day t+1 is equal to the quantity which was present in the warehouse on the previous day t (current day), added to the quantity served on the current day minus the estimated demand for the current day:

$$x_i^{z,p}(t+1) = x_i^{z,p}(t) + w_i^{z,p}(t) - d_i^p(t)$$

$$\begin{aligned} &i \in S \\ &p = 1,..P \\ &z = 1,..,Z \\ &t = 1,..,T-1 \end{aligned} \quad (5)$$

The status variables related to the inventory level are updated on the basis of data received from the electronic devices adapted to monitor the quantity of product in the PUSH points' warehouses; the inventory level is then updated to the "measured current level" of product in stock at the PUSH point, as defined by the additional variable $CML_i^p$.

Constraint (E)

$$x_i^{z,p}(1) = CML_i^p$$

$$\begin{aligned} &i \in S \\ &p = 1,..P \\ &z = 1,..,Z \\ &t = 1,..,T-1 \end{aligned} \quad \text{(E)}$$

In the proposed model, it is assumed that the demand must always be met, with no parts thereof missed or postponed. For this reason, $x_i^{z,p}(t)$ is bound to be always positive in the constraint (P) discussed hereafter. It is also assumed that the up-to-date data about the inventory levels at the PUSH SPs' warehouses are received at the beginning of each day t, so that the inventory status dynamics at the PUSH SPs can be managed properly. The system therefore must also take into account the deliveries planned on the previous day ($wO_i^p$) and scheduled and served on the current day (t=1):

Constraint (F)

$$w_i^{z,p}(1) = wO_i^p$$

$$\begin{matrix} i \in S \\ p = 1,..P \\ z = 1,..,Z \\ t = 1,..,T\text{-}1 \end{matrix} \quad (7)$$

When a point must be served ($w_i^{s,p}(t) > 0$), its decision variable $\delta_i^s(t)$ relating to the number of vehicles employed for that service must be set. The model allows to serve PUSH FULL DROP (SFD) points with more than one vehicle ($\delta_i^{z,p}(t)$=0..N, i SFD) whereas NON FULL DROP PUSH SPs are served with one vehicle at most ($\delta_i^{z,p}(t)$=[0,1], i SND).

Constraint (G)

$$\sum_{p=1}^{P} w_i^{z,p}(t) = CAP * \delta_i^{z,p}(t)$$

$$i \in SFD$$

$$z = 1,..,Z$$

$$t = 1,..,T\text{-}1$$

Constraint (H)

$$-\sum_{p=1}^{P} w_i^{s,p}(t) + M\ \delta_i^s(t) \geq 0$$

$$i \in SND$$

$$z = 1,..,Z$$

$$t = 1,..,T\text{-}1$$

The number of vehicles used for serving PULL points, whether LFD or LND, is calculated in the same way.

Constraint (I)

$$\delta_i\ (t) \geq \frac{\sum_{p=1}^{P} w_i^p(t)}{CAP}$$

$$i \in\ LFD$$

$$t = 1,..,T\text{-}1$$

Constraint (L)

$$-\sum_{p=1}^{P} w_i^p(t) + M\ \delta_i\ (t) \geq 0$$

$$i \in\ LND$$

$$t = 1,..,T\text{-}1$$

Other constraints relate to observing the maximum quantity of product which may be served to PUSH NON FULL DROP (SND) points. Such quantity must not exceed the point's stocking capacity, as imposed by the constraint (M), and must not exceed the estimated product demand for the current week, as imposed by the constraint (N).

Constraint (M)

$$w_i^{z,p}(t) \leq UST_i^{\,p} - x_i^{z,p}(t)$$

$$i \in SND$$
$$p = 1,..P$$
$$z = 1,..,Z \qquad (12)$$
$$t = 2,..,T\text{-}1$$

Constraint (N)

$$w_i^{z,p}(t) \leq \sum_{t=1}^{T} d_i^p(t)$$

$$i \in SND$$
$$p = 1,..P$$
$$z = 1,..,Z$$
$$t = 2,..,T\text{-}1 \qquad (13)$$

Further constraints are then imposed which concern the maximum and minimum allowable inventory levels.

The inventory level must always be positive to prevent any stockouts, and must not exceed the maximum or minimum stocking capacity. For this reason, the minimum and maximum safety threshold values of the inventory levels are imposed by the parameters $\eta_1 \in [0..1]$ and $\eta_2 \in [0..1]$.

Constraint (O)

$$x_i^{z,p}(t) \leq \eta_1 UST_i^p$$

$$i \in S$$

$$p = 1,..P$$

$$z = 1,..,Z$$

$$t = 2,..,T\text{-}1$$

Constraint (P)

$$x_i^{z,p}(t) \geq \eta_2 UST_i^p$$

$$i \in S$$

$$p = 1,..P$$

$$z = 1,..,Z$$

$$t = 2,..,T\text{-}1$$

A further constraint is used for managing the minimum safety stock level of the end points' warehouses. The minimum stock level depends on the parameter $\mu_i$ and on the value $\tau(t)$, which may be set directly by the user.

For each day, the quantity of product in stock at the end point must ensure that the estimated demand for the current day can be met totally ($\mu_i$=1), partially ($\mu_i$<1), or in excess ($\mu_i$>1).

Constraint (Q)

$$x_i^{z,p}(t) \geq \mu_i \, d_i^p(t)$$

$$i \in S$$

$$p = 1,..P$$

$$z = 1,..,Z$$

$$t = 2,..,T\text{-}1$$

The method must also ensure that the actual and estimated orders of the PULL points, whether FULL DROP or NON FULL DROP, are met as well:

Constraint (R)

$$w_i^p(t) = ord_i^p(t)$$

$$i \in L$$

$$p = 1,..P$$

$$t = 1,..,T\text{-}1$$

Furthermore, the method inhibits the service to those end points which are known to be closed on their weekly closure day or on holidays.

If the end point is closed on day t, (*openPV(t)=0*), then no deliveries will be planned ( $w_i^{p,z}(t)=0$ ):

Constraint (S)

$$(1 - openPV_i(t)) * w_i^{p,z}(t) \leq 0$$

$$i \in S$$

$$p = 1,..P$$

$$z = 1,..,Z$$

$$t = 2,..,T\text{-}1$$

Constraint (T)

$$(1 - openPV_i(t)) * w_i^{p}(t) \leq 0$$

$$i \in L$$
$$p = 1,..P \qquad (19)$$
$$t = 1,..,T\text{-}1$$

Formulation of the second step

The second step implements a heuristic algorithm in order to allocate resources (transportation means) to deliveries.

The number of means of transportation is such as to meet the planned delivery schedule, but each vehicle is bound to a maximum service time (e.g. 8 working hours) during which it may make multiple deliveries and tours.

Deliveries may be made by means of dedicated trips (to serve FULL DROP points) or shared tours (to serve NON FULL DROP points), for which the method must also define the distribution route.

The times required for carrying out the product delivery activities take into account the preparation time necessary for loading the vehicle, the time necessary for unloading the product, which varies depending on the quantity thereof, and the time necessary for making the tour.

The time necessary for making the tour is given by a specific OD matrix used for both calculating the dedicated trip times and for calculating the distribution route for the tours shared among NON FULL DROP points.

In this step, the deliveries to the PULL end points, whether FULL DROP (LFD) or NON FULL DROP (LND), which must mandatorily be made, are integrated with one of the deliveries generated in the previous step for each PUSH point, whether FULL DROP (SFD) or NON FULL DROP (SND).

The generation of the delivery planning is based on an original algorithm divided into the four sub-steps listed above, which will be briefly recalled below with the nomenclature in use:

Sub-step 1: deliveries to PULL FULL-DROP points.

In this sub-step, the procedure starts by assigning the deliveries to the points belonging to the LFD set (i.e. PULL FULL-DROP points) in accordance with the orders received. The algorithm schedules the visits to said points by creating dedicated trips for the available vehicles.

For each planning day, the algorithm will:

1) check that a vehicle exists which has not yet finished its work shift:

- if the new delivery to the i-th PULL FULL-DROP (LFD) point does not exceed the maximum service time available for the current vehicle, the order for the i-th PULL FULL-DROP point will be allocated for delivery during the next trip of the current vehicle.
- if there is not even one vehicle which has not yet finished its work shift:

  a new vehicle will be taken into account, and the delivery to the current PULL FULL-DROP (LFD) point will be allocated to the first trip of the current vehicle.

In this sub-step, the delivery route is not optimized, because deliveries are imposed by the PULL point and neither the times nor the quantities thereof may be modified.

Sub-step 2: deliveries and distribution route for PUSH NON FULL-DROP and PULL NON FULL-DROP points.

In this second sub-step, the algorithm allocates the deliveries for the PUSH NON FULL-DROP and PULL NON FULL-DROP (SND and LND) points for the purpose of integrating the orders imposed by the PULL NON FULL-DROP (LND) points with one of the orders generated in step 1 for the PUSH NON FULL-DROP (SND) points. The aim is to optimize the delivery route on all days of the week, by choosing for each PUSH NON FULL-DROP (SND) point that solution which minimizes the distances to be travelled for making the tours. In this sub-step, the products are considered to be aggregated into a single product.

Considering that each means of transportation can make several trips during a work shift, and assuming that NF(i), i=1...NF is the generic NON FULL-DROP point with index i in accordance with the sequence of end points sorted by means of the aforementioned "Giant Tour", the algorithm will then proceed as follows:

1. if NF(i) LND, (if the current point is a PULL one), the system will have to allocate the delivery in accordance with the required quantity and time. The allocation will take place according to the following procedure:

- for the days of the time horizon within which all deliveries must be made, it is verified that there is one vehicle scheduled for a tour in which that delivery can be included without exceeding the vehicle's maximum capacity and service time.
- if there is at least one tour of a vehicle already used in the previous step, the delivery will be allocated in a manner such as to minimize the distance to be travelled in order to carry out the deliveries.
- otherwise, the delivery will be allocated to a new tour of another vehicle having enough available time to carry it out.

2. if NF(i) SND, (if the current point is a PUSH one), the same procedure will be carried out, but each solution generated in step 1 will be analyzed individually. In this case as well, the solution chosen for the current PUSH (SND) point will be the one which, when integrated into the total tour schedule, will turn out to be the least costly.

Sub-step 3: deliveries to PUSH FULL-DROP points.

Finally, deliveries to PUSH FULL-DROP (SFD) points are allocated based on the availability of vehicles' tours by individually evaluating all the solutions generated in step 1. The chosen solution will be allocated in a manner such as to minimize the distribution costs of the entire distribution process, taking into account the following accurately balanced costs:

- equalization of the mileage travelled by the fleet of means of transportation on each planning day
- equalization of the quantity of product issued from the storehouses on each planning day, so as to prevent any demand peaks or days of low fleet utilization
- in particular, the selected solution will aim at minimizing the standard deviation from the daily average value of the quantity of product issued from the storehouse and of the distance travelled daily to serve the scheduled deliveries.

Sub-step 4: optimization of the deliveries in order to improve the utilization of the capacity of the means of transportation.

In the last sub-step, aiming at optimizing the utilization of the fleet of means of transportation and, consequently, the distribution route, the algorithm optimizes the scheduled deliveries by modifying the quantities thereof based on the vehicles' available capacity and on the end points' stocking capacity. The quantity of product required for completely filling the vehicles' capacity is assigned to the PUSH points proportionally to the available stocking capacity thereof. For each PUSH point, the residual stocking capacity is calculated by also taking into consideration the scheduled deliveries to be made.

The quantity of product added in order to load the vehicles fully will be served to the PUSH points proportionally to the available residual stocking capacity percentage.

FIRST EXAMPLE OF EMBODIMENT OF THE METHOD

With reference to Fig. 4, in this first example relating to a simplified case of an extremely small number of end points, it is assumed that seven points 9' are to be managed and a single product is to be distributed over a time horizon of three days by using vehicles all having a capacity of forty units. Fig. 4 shows: one storehouse 1', one PULL FULL DROP point 9', three PUSH NON FULL DROP points 2', 3', 4', two PULL NON FULL DROP points 10', 11' and one PUSH FULL DROP point 5'.

As required by the algorithm, it is assumed that the data concerning the inventory levels of the PUSH sales point 2',3',4',5' and the orders from the PULL sales points 9',10',11' have been received, and that the estimated product demand for each point has been calculated on the basis of historical sales data.

First step of the method

In this embodiment of the method according to the present invention, the first step tackles four problems relating to the four single PUSH points 2',3',4',5'.

For each PUSH point, a set of possible optimal or sub-optimal solutions (e.g. three) are generated which establish the quantities of product to be served and the interval, within the planning horizon, in which each delivery should take place ($w_i^z(t) =$ quantity of product to be served to the i-th SP on day t according to solution z).

In any case, the process meets the constraint that any orders issued by the PULL points must be carried out.

It is assumed that the situation shown in the tables of Figs. 5 and 6 is obtained.

Second step of the method

In the second step, one of the deliveries defined in the previous step is chosen for each PUSH point, according to a heuristic criterion, by taking into account the needs of minimizing transportation costs, equalizing the mileage travelled during the planning time horizon, and equalizing the quantity of product issued from the storehouse during the planning time horizon.

In other words, for each day of the time horizon the minimal cost solution is chosen, which combines the optimal and sub-optimal deliveries selected for the PUSH points in the previous step with the deliveries for the PULL points.

Sub-step 1: first of all, the mandatory deliveries to the single PULL FULL DROP point 9' over the whole time horizon are managed and allocated by assigning a dedicated vehicle on a direct trip.

Sub-step 2: the deliveries to the PUSH and PULL NON FULL DROP points 2',3',4',10',11' are managed simultaneously. Said points 2',3',4',10',11' will be served through shared tours including multiple visits. All the solutions generated in the previous step will be taken into consideration for the PUSH points 2',3',4', whereas the deliveries to the PULL points 10',11' will be allocated in accordance with the orders received from the respective managers. The order of allocation of the deliveries to the NON FULL DROP points 2',3',4',10',11' is defined through a distribution route, the so-called "giant tour", calculated beforehand.

The chosen distribution route will be the shortest route among all those which allow all end points to be visited.

The situation to be managed in the above example is the following: five NON FULL DROP points (of which three PUSH points and two PULL points) geographically located as shown in Fig. 4, so that the chosen distribution route will visit, in this order, the points 2', 4', 10', 3',11' (of course, this route does not include any FULL DROP points, which will be served on dedicated trips).

The tables shown in Figs. 7 and 8 illustrate the distance and time matrices of the points taken into account in this example, which are used for calculating the costs and times for every single allocation and selecting the best solution for each point.

Fig. 9 shows the application of the algorithm: dashed lines designate impossible solutions, continuous lines designate possible solutions, and bold lines designate the chosen solution.

The calculation is made in various successive stages: each stage is associated with each NON FULL DROP point according to the sequence established by the distribution route. Each stage includes the different $S_i^{\hat{z}}$, solutions represented as nodes and associated with each i-th point, generated in the previous step. The cost $C_{i,j}^{z}$ associated with each arc represents the cost to be added to the transportation cost for the current vehicle located in the i-th point in order to reach and serve the subsequent j-th point according to the solution z.

Sub-step 3: finally, the deliveries for the PUSH FULL DROP points are allocated, for which dedicated vehicles are used on direct trips by taking into account all the solutions generated in the previous step and choosing those solutions which, being integrated into the planning generated so far, can minimize transportation costs, equalize the mileage travelled by the fleet on each planning day, and equalize the quantity of product issued from the storehouses on each planning day, so as to avoid any demand peaks or days of low fleet utilization.

At this point, the last trip for serving the PUSH FULL DROP sales point 5' is allocated.

SECOND EXAMPLE OF EMBODIMENT OF THE METHOD

The following non-limiting example refers to the management of the distribution of fuels (petrol, diesel oil, sulphur-free diesel oil) by an oil company: in such a case, the delivery points are filling stations, and the distribution vehicles are tank trucks.

The PUSH delivery points are those which are controlled directly by the oil company itself, which monitors the inventory level of the various fuels in each tank; the PULL delivery points are those for which the filling station's manager autonomously issues refilling orders which must be met by the oil company.

The example relates to the automatic generation of orders for thirty-two PUSH delivery points and three hundred and eighty PULL delivery points.

As a firsts step, the method provides for acquiring the inventory levels of the PUSH delivery points, i.e. acquiring the quantities of every single product contained in the underground tanks (e.g. by acquiring data read by level sensors arranged in the tanks, which detect and send this data several times a day).

The initial step also includes the acquisition of data concerning the dispensed quantities, i.e. the quantity of a specific product sold within the twenty-four hours preceding the reading.

In this regard, reference should be made to Figs. 10, 11, 12, 13, 14, wherein columns B95, D and BD relate to petrol, diesel oil and sulphur-free diesel oil, respectively; these figures show the acquisition of data relating to the inventory levels of the thirty-two PUSH delivery points, respectively at 16:30 and 22:30 on the day before the order generation day (Figs. 10 and 11), and at 4:30 and 8:45 on the planning day (Figs. 12 and 13).

Fig. 14 shows the acquisition of data about the quantities of specific products dispensed by the PUSH delivery points within the twenty-four hours preceding the planning day.

With reference to Fig. 15, during the initial step the user wanting to generate orders is required to provide specifications pertaining to:

- the planning time horizon (i.e. number of days for which the system must generate orders automatically);
- the period of evaluation of the dispensed quantities: this piece of information is useful for calculating the estimated demand for the days after the first one.

As far as the estimated demand in the planning week is concerned, the data of the first day is the data acquired in real time about the quantities sold on the day before, whereas, for the days after the first one, the dispended quantities are estimated on the basis of historical sales data (in this case, the estimation takes into account the average quantities dispensed in the previous eight weeks).

Fig. 16 shows a table that summarizes the data relating to dispended quantities and estimated demand for each product at the PUSH delivery points on each day.

At this point (see Fig. 17), the orders of the PULL delivery points issued for the planning days are acquired: in particular, the orders for the first day are the actual orders issued by the PULL delivery points, while for the days after the first one the orders are estimated on a statistic basis according to the orders issued in the previous weeks.

Once the initial step is over, it is followed by the two steps previously described:

the PUSH sales points are first taken into consideration, for which the best solutions are searched for in terms of minimization of inventory and transportation costs while optimizing fleet utilization, so as to identify the product quantities to be served and the interval, within the planning horizon, in which each delivery must take place.

For the set of PUSH sales points, more than one optimal solution may be found and calculated. The number of said optimal solutions calculated and taken into account by the method may be defined by the user in a manner such as to increase or decrease the method's computational load; in the specific case of the example provided herein, it has been chosen to generate three different optimal solutions for each delivery point.

The user also defines the planning time horizon (one week in this example), the parameters pertaining to the minimum safety stock level (i.e. the user can choose, for each delivery point, the tank capacity percentage value to be maintained in order to ensure the minimum safety levels), and the demand multiplication coefficient (in some cases or for particular days of the year, in fact, it may be necessary to modify the estimated demand for the planning days. With this option, the user can decrease or increase the multiplication factor of the estimated demand for each specific day in order to foresee possible demand peaks or drops).

Then the PUSH sales points are classified (see Fig. 18) into FULL DROP and NON FULL DROP; for both types it is possible to set the number of tank trucks dedicated to serving each single end point on each planning day (Figs. 19 and 20).

It is advantageously possible to provide that, for the purpose of avoiding any inadmissible solutions, the coefficient are calculated automatically so as to ensure that the safety stock is maintained. In particular, Fig. 21 highlights the values calculated automatically so as to ensure that, for each day, the quantity of product in stock at the delivery point can meet totally, partially or in excess the estimated demand for the current day.

The minimum and maximum safety threshold values of the inventory levels are imposed in a manner such that, for example, the maximum percentage value is 90% and the minimum one is 15% of the total capacity of the tank), as shown in Fig. 21.

In the example shown, the system generates, for each PUSH delivery point, three different optimal solutions under the above-mentioned conditions; a comparison of these three solutions is shown in Fig. 22.

As shown in Fig. 23, a number of additional parameters must be set:

working hours of each tank truck;
tank truck capacity;
number of tank trucks in the fleet available for the planning;
time required for loading the vehicle at the storehouse;
unloading setup time: time required by the driver to set up the pumps in accordance with the safety requirements in order to unload the product from the tank truck and refill the underground tanks;
standard unloading time for FULL DROP deliveries, with dedicated loads to be unloaded at a single delivery point;
speed of unloading the products from the tank truck to the underground tanks for NON FULL DROP deliveries;
maximum tank truck filling percentage;
maximum allowable time in addition to the standard working hours for finishing the assigned tours;
time limit, in minutes, for allocating a subsequent tour for each tank truck.

This leads to the generation of the final solution, as shown in Fig. 24 and in accordance with the above discussion, by associating with each PUSH delivery point on each planning day:

the quantity of each product to be served, and
the moment at which it must be served.

For each day, the tours of each tank truck in the fleet are generated by specifying:

the delivery points to be served in accordance with the orders generated or requested, respectively;
the mileage travelled on each tour and the total daily mileage;
the total quantity to be loaded in order to meet the requirements of the scheduled delivery points to be served;
the working time of each tank truck on each tour.

Fig. 25 shows an example of a single tour of a tank truck, while Fig. 26 shows a map indicating the route to be followed and the delivery points to be served along that route.

Although in the example provided it has been chosen to illustrate the method of the present invention as being applied to a network of filling stations, it may of course be applied to the distribution of any other product, whether liquid (such as milk, water or the like) or not (such as solid foodstuffs or other goods) to be supplied to any type of delivery point, such as retailers, wholesalers, supermarkets or local distribution depots. Likewise, the means of transportation, represented in the above-described example by tank trucks, may equivalently consist of different vehicles, whether road vehicles (such as vans, trucks or the like) or vehicles of a different type (such as ships or airplanes).

## Claims

**1.** Method for managing the distribution of products or goods from at least one storehouse to a plurality of delivery points of a distribution network through at least one means of transportation within a predetermined planning time interval, said method being adapted to define the quantity of product to be delivered and the moment at which delivery must take place for each network point,
**characterized in that** it comprises a step of classifying the network points in order to divide them into points for which delivery is established by the network manager, called PUSH points, and points for which delivery is autonomous, called PULL points.

**2.** Method according to claim 1, comprising the step of:

- classifying the delivery points on the basis of the estimated demand and as a function of the maximum quantity of product that can be carried by each single means of transportation, so as to divide the delivery points into points for which the quantity of product to be restocked equals the maximum capacity of a means of transportation, called FULL DROP points, and points that require a smaller quantity of product than the capacity of a means of transportation, called NON FULL DROP points.

**3.** Method according to claim 1 or 2, comprising, for each PUSH delivery point and for each product, the steps of:

- detecting a warehouse stock level
- detecting the quantity of product issued from the warehouse within a finite time interval prior to the planning horizon;
- estimating the future demand on the basis of said detections.

**4.** Method according to one of claims 1 to 3, comprising, for each PULL delivery point and for each product, the steps of:

- acquiring an order including the type and quantity of product to be delivered on the first day of the planning time interval;
- estimating the demand for the days of the planning interval following the first one, said estimation being generated on a statistic basis according to orders issued in the previous weeks.

**5.** Method according to claim 4, comprising the step of identifying, for PUSH delivery points, sets of optimal deliveries such that inventory and transportation costs are minimized by equalizing the use of the means of transportation, thus identifying the quantities of product to be served and the time interval, prior to the planning horizon, within which each delivery must take place.

**6.** Method according to claim 5, comprising the step of:

- assigning the means of transportation required for making the deliveries to PULL FULL DROP delivery points;
- calculating, for all sets of optimal deliveries identified for the PUSH NON FULL DROP points and for the orders acquired for the PULL NON FULL DROP delivery points, the combinations thereof which minimize the transportation cost by assuming that all the system's delivery points will be visited only once;
- assigning the means of transportation required for making the deliveries to the PUSH FULL DROP delivery points in a manner such as to minimize the transportation costs, equalize the mileage travelled by the fleet on each planning day, and equalize the quantity of product issued from the storehouse on each planning day.
- modifying the deliveries in order to optimize the utilization of the vehicles' capacity.

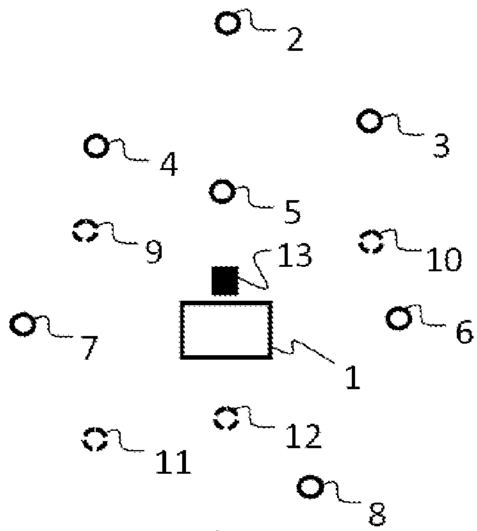
2
3
4
5
9
13
10
7
1
6
12
11
8

Fig. 1

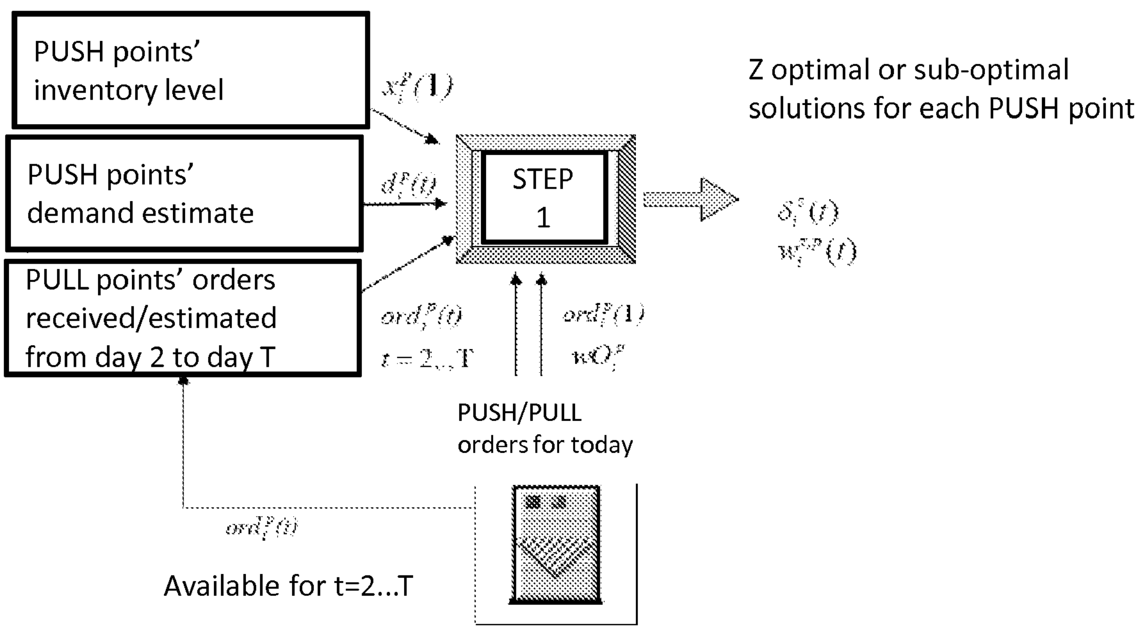
PUSH points' inventory level
PUSH points' demand estimate
PULL points' orders received/estimated from day 2 to day T
$x_i^P(1)$
$d_i^P(t)$
$ord_i^P(t)$
$t=2,..,T$
STEP 1
$ord_i^P(1)$
$wO_i^P$
Z optimal or sub-optimal solutions for each PUSH point
$\delta_i^z(t)$
$w_i^{z,P}(t)$
PUSH/PULL orders for today
$ord_i^P(t)$
Available for t=2...T

Fig.2

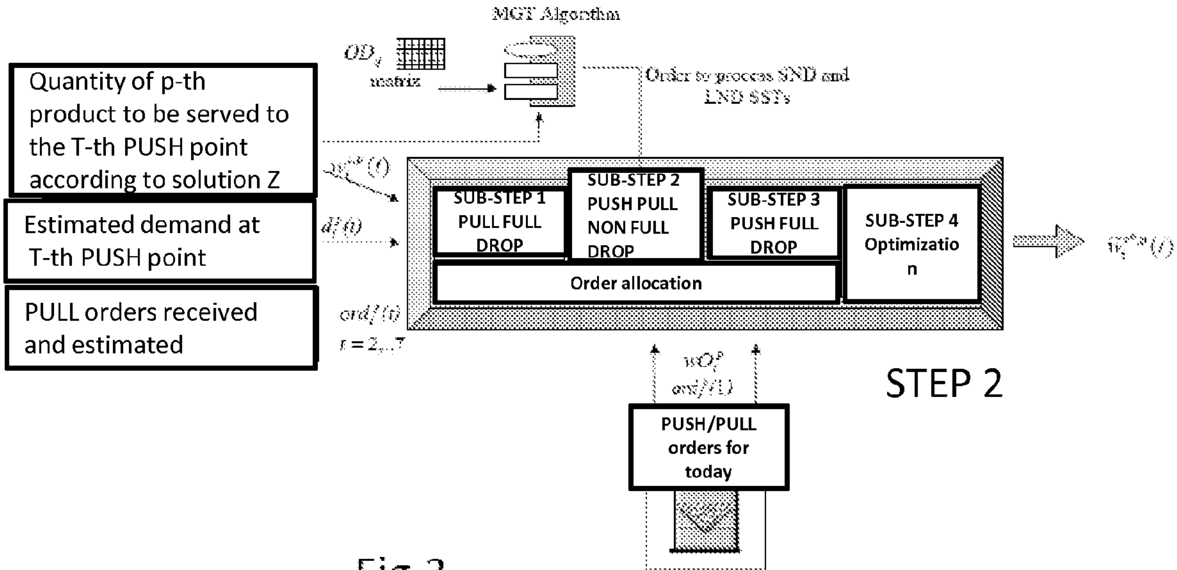
MGT Algorithm
matrix
Order to process SND and LND SSTs
Quantity of p-th product to be served to the T-th PUSH point according to solution Z
Estimated demand at T-th PUSH point
PULL orders received and estimated
SUB-STEP 1 PULL FULL DROP
SUB-STEP 2 PUSH PULL NON FULL DROP
SUB-STEP 3 PUSH FULL DROP
SUB-STEP 4 Optimizatio n
Order allocation
STEP 2
PUSH/PULL orders for today

Fig.3

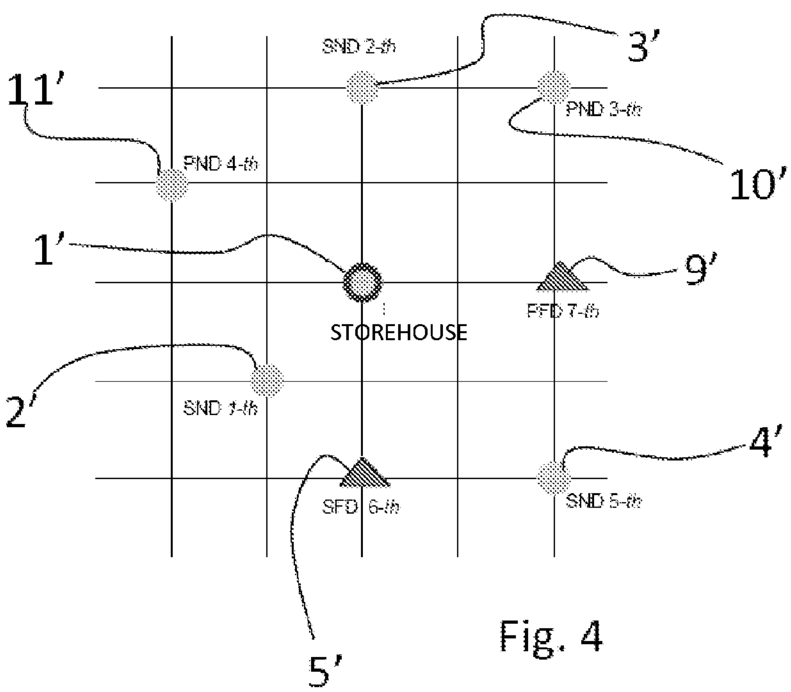
SND 2-th
3'
11'
PND 3-th
PND 4-th
10'
1'
9'
STOREHOUSE
PFD 7-th
2'
SND 1-th
4'
SFD 6-th
SND 5-th
5'

Fig. 4

PUSH points

| Orders Generated | SOLUTION 1 | | | SOLUTION 2 | | | SOLUTION 3 | | |
|---|---|---|---|---|---|---|---|---|---|
| PUSH | DAY 1 | DAY 2 | DAY 3 | DAY 1 | DAY 2 | DAY 3 | DAY 1 | DAY 2 | DAY 3 |
| POINT 2' | 30 | 10 | 0 | 20 | 20 | 0 | 10 | 10 | 10 |
| POINT 3' | 15 | 15 | 5 | 10 | 20 | 5 | 10 | 20 | 5 |
| POINT 4' | 20 | 10 | 10 | 20 | 20 | 0 | 10 | 20 | 10 |
| POINT 5' | 40 | 0 | 0 | 0 | 40 | 0 | 0 | 0 | 40 |

Fig.5

PULL points

| Orders placed | Day 1 | Day 2 | Day 3 |
|---|---|---|---|
| POINT 10' | 10 | 10 | 10 |
| POINT 11' | 15 | 10 | 5 |
| POINT 9' | 0 | 0 | 40 |

Fig.6

| | 0 | 1 | 2 | 3 | 4 | 5 |
|---|---|---|---|---|---|---|
| 0 | 0 | 20 | 100 | 140 | [illegible] | 240 |
| 1 | 20 | 0 | 100 | [illegible] | [illegible] | [illegible] |
| 2 | 100 | 100 | 0 | [illegible] | [illegible] | [illegible] |
| 3 | 140 | [illegible] | 100 | 0 | [illegible] | [illegible] |
| 4 | [illegible] | [illegible] | [illegible] | [illegible] | 0 | [illegible] |
| 5 | 140 | 100 | [illegible] | [illegible] | [illegible] | 0 |

Fig. 7

| | 0 | 1 | 2 | 3 | 4 | 5 |
|---|---|---|---|---|---|---|
| 0 | 0 | 24 | 120 | 288 | [illegible] | [illegible] |
| 1 | [illegible] | 0 | [illegible] | [illegible] | [illegible] | [illegible] |
| 2 | 120 | [illegible] | 0 | [illegible] | [illegible] | [illegible] |
| 3 | 168 | [illegible] | 120 | 0 | [illegible] | [illegible] |
| 4 | [illegible] | [illegible] | [illegible] | [illegible] | 0 | [illegible] |
| 5 | [illegible] | [illegible] | [illegible] | [illegible] | [illegible] | 0 |

Fig.8

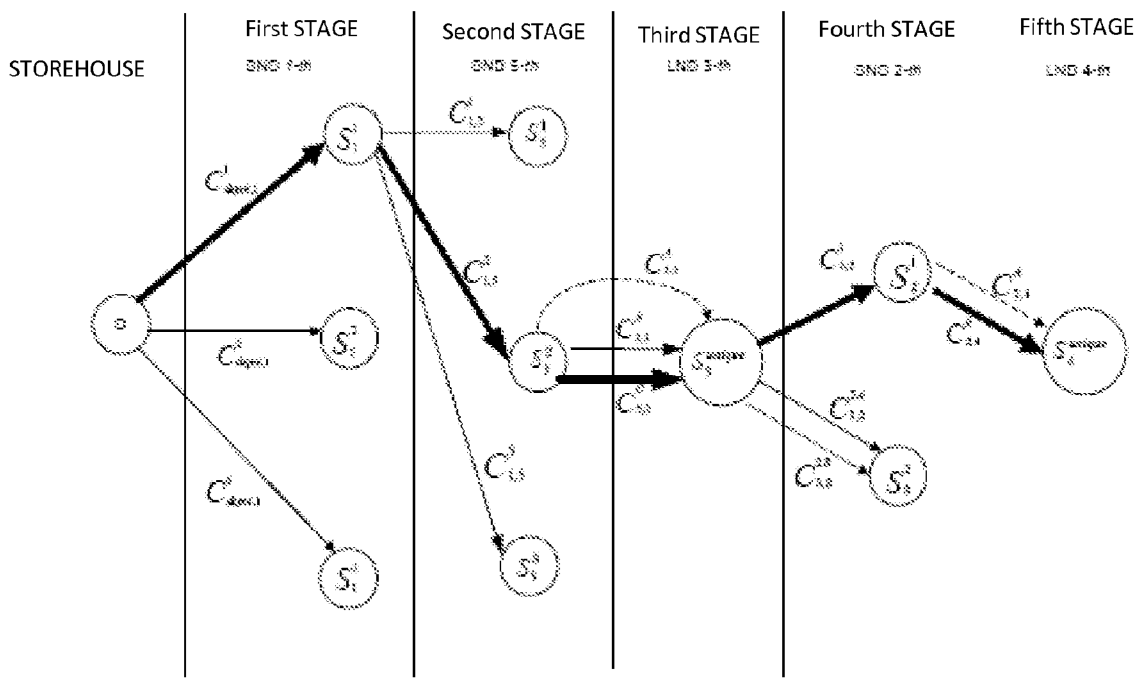


FIG.9

ORDER GENERATION –phase 1 of 11- CHECKING RECEIVED LEVELS AND DISPENSED QUANTITIES

NEXT

Levels received at 16:30 on 15/12/2008

| | PV | READ ON | TRANSMISSION | BSS | G | BD |
|---|---|---|---|---|---|---|
| 1 | 352 | 15/12/2008 10.59.59 | 15/12/2008 16.30.30 | 13978,00 | 14655,52 | 4063,09 |
| 2 | 380 | 15/12/2008 11.00.02 | 15/12/2008 16.30.30 | 10813,75 | 10632,07 | 8464,78 |
| 3 | 458 | 15/12/2008 11.00.03 | 15/12/2008 16.30.30 | 10768,33 | 4390,60 | 9958,82 |
| 4 | 488 | 15/12/2008 10.59.59 | 15/12/2008 16.30.30 | 7021,18 | 7765,75 | 8709,29 |
| 5 | 1640 | 15/12/2008 11.03.00 | 15/12/2008 16.30.30 | 12797,08 | 11003,00 | 16506,40 |
| 6 | 1641 | 15/12/2008 11.03.00 | 15/12/2008 16.30.30 | 25408,70 | 16124,11 | 16423,10 |
| 7 | 1653 | 15/12/2008 11.05.01 | 15/12/2008 16.30.30 | 6627,54 | 7876,59 | 1703,28 |
| 8 | 1696 | 15/12/2008 11.04.59 | 15/12/2008 16.30.30 | 13830,38 | 20306,53 | 2086,62 |
| 9 | 1844 | 15/12/2008 11.03.00 | 15/12/2008 16.30.30 | 9242,97 | 13573,62 | 4780,46 |
| 10 | 1852 | 15/12/2008 11.05.00 | 15/12/2008 16.30.30 | 10034,60 | 8299,32 | 1074,94 |
| 11 | 1880 | 15/12/2008 11.07.02 | 15/12/2008 16.30.30 | 10011,33 | 840,27 | 2846,32 |
| 12 | 1900 | 15/12/2008 11.03.00 | 15/12/2008 16.30.30 | 12582,41 | 9992,40 | 4148,36 |
| 13 | 1923 | 15/12/2008 11.04.59 | 15/12/2008 16.30.30 | 0,00 | 0,00 | 0,00 |
| 14 | 2238 | 15/12/2008 11.10.02 | 15/12/2008 16.30.30 | 12414,81 | 7373,79 | 3766,08 |
| 15 | 2531 | 15/12/2008 11.14.59 | 15/12/2008 16.30.30 | 5034,06 | 11408,00 | 10045,39 |
| 16 | 2760 | 15/12/2008 11.15.00 | 15/12/2008 16.30.30 | 8164,24 | 12838,72 | 2782,05 |
| 17 | 2807 | 15/12/2008 11.15.00 | 15/12/2008 16.30.30 | 5196,81 | 8111,26 | 4091,59 |
| 18 | 2817 | 15/12/2008 11.15.01 | 15/12/2008 16.30.30 | 0,00 | 0,00 | 0,00 |
| 19 | 2838 | 15/12/2008 11.14.00 | 15/12/2008 16.30.31 | 25499,52 | 15741,81 | 5454,19 |
| 20 | 2872 | | | - | - | - |
| 21 | 2903 | 15/12/2008 11.15.01 | 15/12/2008 16.30.30 | 13731,98 | 10965,10 | 707,79 |
| 22 | 2904 | 15/12/2008 11.00.00 | 15/12/2008 16.30.30 | 9550,81 | 12339,11 | 3031,79 |
| 23 | 11660 | 15/12/2008 11.20.00 | 15/12/2008 16.30.30 | 7599,30 | 17183,91 | 5481,76 |
| 24 | 12160 | 15/12/2008 11.19.59 | 15/12/2008 16.30.30 | 18184,67 | 20711,48 | 4477,66 |
| 25 | 51213 | 15/12/2008 11.20.01 | 15/12/2008 16.30.31 | 2861,47 | 1631,33 | 140,04 |
| 26 | 51832 | - | - | - | - | - |
| 27 | 51998 | 15/12/2008 10.59.59 | 15/12/2008 16.30.31 | 19465,19 | 12350,46 | 4625,27 |
| 28 | 54364 | 15/12/2008 11.00.00 | 15/12/2008 16.30.31 | 11139,82 | 9197,54 | 4373,46 |
| 29 | 56030 | 15/12/2008 11.25.00 | 15/12/2008 16.30.31 | 0,00 | 0,00 | 0,00 |
| 30 | 56277 | 15/12/2008 11.24.59 | 15/12/2008 16.30.31 | 7086,50 | 3803,93 | 2819,83 |
| 31 | 59053 | - | - | - | - | - |
| 32 | 59087 | 15/12/2008 11.25.00 | 15/12/2008 16.30.31 | 9948,38 | 12384,33 | 2937,16 |

Fig. 10

Levels received at 22:30 on 15/12/2008

| | PV | READ ON | TRANSMISSION | BSS | G | BD |
|---|---|---|---|---|---|---|
| 1 | 352 | 15/12/2008 16.59.59 | 15/12/2008 22.30.11 | 12320,17 | 13077,18 | 3671,45 |
| 2 | 380 | 15/12/2008 16.59.59 | 15/12/2008 22.30.11 | 9837,22 | 8789,29 | 6298,38 |
| 3 | 458 | 15/12/2008 17.00.02 | 15/12/2008 22.30.11 | 9330,83 | 10567,79 | 9901,56 |
| 4 | 488 | 15/12/2008 16.59.59 | 15/12/2008 22.30.11 | 5003,98 | 6108,98 | 8867,04 |
| 5 | 1640 | 15/12/2008 17.04.59 | 15/12/2008 22.30.11 | 26283,00 | 21442,00 | 15957,60 |
| 6 | 1641 | 15/12/2008 17.04.59 | 15/12/2008 22.30.11 | 24814,50 | 15288,69 | 16423,10 |
| 7 | 1653 | 15/12/2008 17.05.01 | 15/12/2008 22.30.11 | 6078,72 | 6400,44 | 1358,82 |
| 8 | 1696 | 15/12/2008 17.04.59 | 15/12/2008 22.30.11 | 12494,39 | 12569,22 | 1847,09 |
| 9 | 1844 | 15/12/2008 17.04.59 | 15/12/2008 22.30.11 | 6983,32 | 11487,48 | 4451,44 |
| 10 | 1852 | 15/12/2008 17.04.59 | 15/12/2008 22.30.11 | 8406,49 | 7070,38 | 753,22 |
| 11 | 1880 | 15/12/2008 17.07.01 | 15/12/2008 22.30.11 | 23773,60 | 14284,59 | 6483,71 |
| 12 | 1900 | 15/12/2008 17.05.00 | 15/12/2008 22.30.11 | 10476,87 | 8296,72 | 4057,52 |
| 13 | 1923 | 15/12/2008 17.04.59 | 15/12/2008 22.30.11 | 0,00 | 0,00 | 0,00 |
| 14 | 2238 | 15/12/2008 17.10.02 | 15/12/2008 22.30.11 | 20908,34 | 18342,08 | 3213,47 |
| 15 | 2531 | 15/12/2008 17.14.59 | 15/12/2008 22.30.11 | 20942,40 | 26457,15 | 12774,38 |
| 16 | 2760 | 15/12/2008 17.14.59 | 15/12/2008 22.30.11 | 7119,59 | 10567,72 | 2634,36 |
| 17 | 2807 | 15/12/2008 17.14.59 | 15/12/2008 22.30.11 | 19352,71 | 22278,50 | 8890,96 |
| 18 | 2817 | 15/12/2008 17.15.01 | 15/12/2008 22.22.11 | 0,00 | 0,00 | 0,00 |
| 19 | 2838 | 15/12/2008 17.14.00 | 15/12/2008 22.30.12 | 22202,81 | 14189,94 | 5079,48 |
| 20 | 2872 | 15/12/2008 17.15.00 | 15/12/2008 22.30.11 | 12948,50 | 26648,40 | 8905,28 |
| 21 | 2903 | - | - | - | - | - |
| 22 | 2904 | 15/12/2008 17.00.02 | 15/12/2008 22.30.11 | 8959,10 | 20180,00 | 4897,40 |
| 23 | 11660 | 15/12/2008 17.19.59 | 15/12/2008 22.30.11 | 5847,83 | 12736,53 | 5420,12 |
| 24 | 12160 | 15/12/2008 17.15.00 | 15/12/2008 22.30.11 | 14553,33 | 18463,24 | 4358,88 |
| 25 | 51213 | 15/12/2008 17.20.00 | 15/12/2008 22.30.12 | 6729,73 | 4242,99 | 2009,84 |
| 26 | 51832 | 15/12/2008 17.24.59 | 15/12/2008 22.30.12 | 12846,30 | 23693,60 | 6028,51 |
| 27 | 51998 | 15/12/2008 16.59.59 | 15/12/2008 22.30.12 | 19465,19 | 12350,46 | 4625,27 |
| 28 | 54364 | 15/12/2008 17.00.00 | 15/12/2008 22.30.12 | 9242,28 | 8039,34 | 4235,42 |
| 29 | 56030 | 15/12/2008 17.25.02 | 15/12/2008 22.30.12 | 17558,62 | 8016,63 | 6438,28 |
| 30 | 56277 | 15/12/2008 17.24.59 | 15/12/2008 22.30.12 | 16336,07 | 21468,50 | 9378,23 |
| 31 | 59053 | 15/12/2008 17.24.59 | 15/12/2008 22.30.12 | 19950,79 | 22411,00 | 6252,82 |
| 32 | 59087 | 15/12/2008 17.25.00 | 15/12/2008 22.30.12 | 8667,85 | 10775,90 | 2891,14 |

Fig. 11

Levels received at 4:30 on 16/12/2008

| | PV | READ ON | TRANSMISSION | [illegible] | [illegible] | [illegible] |
|---|---|---|---|---|---|---|
| 1 | 352 | 15/12/2008 23.59.59 | 16/12/2008 4.30.10 | 10798,61 | 11351,23 | 3417,85 |
| 2 | 380 | 15/12/2008 23.59.59 | 16/12/2008 4.30.10 | 8754,73 | 7800,28 | 6211,19 |
| 3 | 458 | 15/12/2008 23.00.02 | 16/12/2008 4.30.10 | 8133,97 | 9072,85 | 9806,94 |
| 4 | 488 | 15/12/2008 23.59.59 | 16/12/2008 4.30.10 | 3826,64 | 5299,80 | 8338,35 |
| 5 | 1640 | 15/12/2008 23.04.59 | 16/12/2008 4.30.10 | 40866,70 | 33595,60 | 15450,40 |
| 6 | 1641 | 15/12/2008 23.04.59 | 16/12/2008 4.30.10 | 24031,00 | 14341,37 | 16381,50 |
| 7 | 1653 | 15/12/2008 23.05.01 | 16/12/2008 4.30.10 | 5439,05 | 5140,03 | 1199,84 |
| 8 | 1696 | 15/12/2008 23.04.59 | 16/12/2008 4.30.10 | 11241,48 | 17259,60 | 1521,38 |
| 9 | 1844 | 15/12/2008 23.04.59 | 16/12/2008 4.30.10 | 5889,47 | 9579,83 | 4394,39 |
| 10 | 1852 | 15/12/2008 23.24.59 | 16/12/2008 4.30.10 | 7706,26 | 6177,13 | 730,50 |
| 11 | 1880 | 15/12/2008 23.07.02 | 16/12/2008 4.30.10 | 21071,10 | 12755,45 | 6324,74 |
| 12 | 1900 | 15/12/2008 23.24.59 | 16/12/2008 4.30.11 | 9250,54 | 7570,01 | 4012,10 |
| 13 | 1923 | 15/12/2008 23.04.59 | 16/12/2008 4.30.10 | 0,00 | 0,00 | 0,00 |
| 14 | 2238 | 15/12/2008 23.59.59 | 16/12/2008 4.30.10 | 18822,81 | 17827,35 | 2967,45 |
| 15 | 2531 | - | - | - | - | - |
| 16 | 2760 | 15/12/2008 23.14.59 | 16/12/2008 4.30.10 | 6355,03 | 10015,11 | 2543,52 |
| 17 | 2807 | 15/12/2008 23.15.00 | 16/12/2008 4.30.10 | 17418,58 | 20563,93 | 8523,82 |
| 18 | 2817 | 15/12/2008 23.15.00 | 16/12/2008 4.30.10 | 0,00 | 0,00 | 0,00 |
| 19 | 2838 | 15/12/2008 23.13.59 | 16/12/2008 4.30.11 | 20885,64 | 12887,94 | 4924,29 |
| 20 | 2872 | 15/12/2008 23.15.00 | 16/12/2008 4.30.11 | 12009,80 | 25446,50 | 7778,18 |
| 21 | 2903 | 15/12/2008 23.15.00 | 16/12/2008 4.30.11 | 11199,82 | 8853,12 | 707,79 |
| 22 | 2904 | 15/12/2008 23.59.59 | 16/12/2008 4.30.11 | 18069,60 | 18088,55 | 4379,25 |
| 23 | 11660 | 15/12/2008 23.19.59 | 16/12/2008 4.30.11 | 4258,13 | 10730,49 | 5325,50 |
| 24 | 12160 | 15/12/2008 23.14.59 | 16/12/2008 4.30.11 | 12971,20 | 16400,41 | 3864,49 |
| 25 | 51213 | 15/12/2008 23.20.00 | 16/12/2008 4.30.11 | 5098,39 | 3516,27 | 1926,57 |
| 26 | 51832 | 15/12/2008 23.24.59 | 16/12/2008 4.30.11 | 11888,70 | 23701,70 | 5768,34 |
| 27 | 51998 | 15/12/2008 23.59.59 | 16/12/2008 4.30.11 | 19485,19 | 12350,46 | 4625,27 |
| 28 | 54364 | 15/12/2008 23.00.02 | 16/12/2008 4.30.11 | 7195,29 | 6915,19 | 4102,94 |
| 29 | 56030 | 15/12/2008 23.24.59 | 16/12/2008 4.30.11 | 15208,14 | 6911,41 | 6309,60 |
| 30 | 56277 | 15/12/2008 23.24.59 | 16/12/2008 4.30.11 | 15389,81 | 20185,40 | 9193,77 |
| 31 | 59053 | 15/12/2008 23.24.59 | 16/12/2008 4.30.11 | 18644,92 | 19753,88 | 6131,70 |
| 32 | 59087 | 15/12/2008 23.24.59 | 16/12/2008 4.30.11 | 7497,25 | 9224,85 | 2493,48 |

Fig. 12

Levels received at 8:45 on 16/12/2008

| | PV | READ ON | TRANSMISSION | [illegible] | [illegible] | [illegible] |
|---|---|---|---|---|---|---|
| 1 | 352 | 16/12/2008 5.00.00 | 16/12/2008 8.45.08 | 10726,69 | 11211,17 | 3417,85 |
| 2 | 380 | 16/12/2008 5.00.01 | 16/12/2008 8.45.08 | 8660,59 | 7562,44 | 6211,19 |
| 3 | 458 | 16/12/2008 5.00.04 | 16/12/2008 8.45.08 | 8058,27 | 9061,29 | 9806,94 |
| 4 | 488 | 16/12/2008 5.00.00 | 16/12/2008 8.45.08 | 3768,58 | 5230,87 | 8338,35 |
| 5 | 1640 | 16/12/2008 5.05.00 | 16/12/2008 8.45.08 | 40427,80 | 32993,80 | 15366,00 |
| 6 | 1641 | 16/12/2008 5.05.01 | 16/12/2008 8.45.08 | 24012,00 | 14337,58 | 16381,50 |
| 7 | 1653 | 16/12/2008 5.05.03 | 16/12/2008 8.45.08 | 5439,05 | 5140,03 | 1199,84 |
| 8 | 1696 | 16/12/2008 5.05.01 | 16/12/2008 8.45.08 | 11158,39 | 17244,48 | 1521,38 |
| 9 | 1844 | 16/12/2008 5.05.00 | 16/12/2008 8.45.08 | 5809,98 | 9454,93 | 4348,97 |
| 10 | 1852 | 16/12/2008 5.05.00 | 16/12/2008 8.45.08 | 7664,83 | 6131,70 | 730,50 |
| 11 | 1880 | 16/12/2008 5.07.02 | 16/12/2008 8.45.08 | 20881,85 | 12619,19 | 6324,74 |
| 12 | 1900 | 16/12/2008 5.05.02 | 16/12/2008 8.45.08 | 9182,41 | 7505,66 | 3993,18 |
| 13 | 1923 | 16/12/2008 5.05.00 | 16/12/2008 8.45.08 | 0,00 | 0,00 | 0,00 |
| 14 | 2238 | 16/12/2008 5.10.00 | 16/12/2008 8.45.08 | 18168,21 | 16979,51 | 2905,88 |
| 15 | 2531 | 16/12/2008 5.15.00 | 16/12/2008 8.45.08 | 18644,92 | 24186,17 | 12497,52 |
| 16 | 2760 | 16/12/2008 5.15.00 | 16/12/2008 8.45.08 | 6334,74 | 9969,88 | 2543,52 |
| 17 | 2807 | 16/12/2008 5.15.01 | 16/12/2008 8.45.08 | 17331,52 | 20473,09 | 8523,82 |
| 18 | 2817 | 16/12/2008 5.15.01 | 16/12/2008 8.45.08 | 0,00 | 0,00 | 0,00 |
| 19 | 2838 | 16/12/2008 5.14.00 | 16/12/2008 8.45.08 | 20635,36 | 12634,34 | 4924,29 |
| 20 | 2872 | 16/12/2008 5.15.02 | 16/12/2008 8.45.08 | 11979,50 | 25339,50 | 7778,18 |
| 21 | 2903 | 16/12/2008 5.15.01 | 16/12/2008 8.45.08 | 11067,35 | 8705,50 | 707,79 |
| 22 | 2904 | 16/12/2008 5.00.00 | 16/12/2008 8.45.08 | 17959,83 | 17974,89 | 4379,25 |
| 23 | 11660 | 16/12/2008 5.20.01 | 16/12/2008 8.45.08 | 4102,95 | 10556,38 | 5325,50 |
| 24 | 12160 | 16/12/2008 5.15.00 | 16/12/2008 8.45.08 | 12857,85 | 16232,28 | 3838,07 |
| 25 | 51213 | 16/12/2008 5.20.01 | 16/12/2008 8.45.08 | 5098,39 | 3516,27 | 1926,57 |
| 26 | 51832 | 16/12/2008 5.25.00 | 16/12/2008 8.45.08 | 11828,10 | 23632,20 | 5768,34 |
| 27 | 51998 | 16/12/2008 5.00.00 | 16/12/2008 8.45.08 | 19485,19 | 12350,46 | 4625,27 |
| 28 | 54364 | 16/12/2008 5.00.01 | 16/12/2008 8.45.08 | 6653,04 | 6838,49 | 4102,94 |
| 29 | 56030 | 16/12/2008 5.25.00 | 16/12/2008 8.45.08 | 15151,37 | 6843,28 | 6290,67 |
| 30 | 56277 | 16/12/2008 5.25.00 | 16/12/2008 8.45.08 | 15342,20 | 19632,80 | 9073,65 |
| 31 | 59053 | 16/12/2008 5.25.00 | 16/12/2008 8.45.08 | 18501,09 | 19401,92 | 6116,55 |
| 32 | 59087 | 16/12/2008 5.25.00 | 16/12/2008 8.45.08 | 7263,42 | 9080,22 | 2389,06 |

Fig. 13

Quantity dispensed on 15/12/2008 received automatically

| | PV | TRANSMISSION | B95 | G | BD |
|---|---|---|---|---|---|
| 1 | **352** | 16/12/2008 8.45.13 | 4208,56 | 6101,77 | 1388,20 |
| 2 | **380** | 16/12/2008 8.45.13 | 3593,10 | 4878,09 | 736,30 |
| 3 | **458** | 16/12/2008 8.45.13 | 4338,11 | 5595,39 | 348,47 |
| 4 | **488** | 16/12/2008 8.45.13 | 5274,59 | 4290,93 | 681,81 |
| 5 | **1640** | 16/12/2008 8.45.13 | 12677,49 | 21405,91 | 1906,17 |
| 6 | **1641** | 16/12/2008 8.45.13 | 1977,48 | 2854,43 | 96,13 |
| 7 | **1653** | 16/12/2008 8.45.13 | 2331,69 | 4375,48 | 720,54 |
| 8 | **1696** | 16/12/2008 8.45.13 | 4090,51 | 5338,35 | 786,98 |
| 9 | **1844** | 16/12/2008 8.45.13 | 5895,07 | 6720,62 | 818,78 |
| 10 | **1852** | 16/12/2008 8.45.13 | 4089,86 | 4212,61 | 645,72 |
| 11 | **1880** | 16/12/2008 8.45.13 | 8139,55 | 5412,79 | 2148,75 |
| 12 | **1900** | 16/12/2008 8.45.13 | 5188,91 | 3934,42 | 255,28 |
| 13 | **1923** | 16/12/2008 8.45.13 | 2641,81 | 0,00 | 3032,53 |
| 14 | **2238** | 16/12/2008 8.45.13 | 9252,57 | 12513,18 | 1106,73 |
| 15 | **2531** | 16/12/2008 8.45.13 | 6235,43 | 5965,16 | 783,50 |
| 16 | **2760** | 16/12/2008 8.45.13 | 2766,36 | 4074,13 | 309,95 |
| 17 | **2807** | 16/12/2008 8.45.13 | 5740,03 | 5470,95 | 913,62 |
| 18 | **2817** | 16/12/2008 8.45.13 | 6138,72 | 7127,79 | 993,71 |
| 19 | **2838** | 16/12/2008 8.45.13 | 6930,88 | 4735,51 | 1105,91 |
| 20 | **2872** | 16/12/2008 8.45.13 | 3302,42 | 6494,43 | 767,52 |
| 21 | **2903** | 16/12/2008 8.45.13 | 3844,05 | 3312,39 | 0,00 |
| 22 | **2904** | 16/12/2008 8.45.13 | 8052,88 | 7605,83 | 858,61 |
| 23 | **11660** | 16/12/2008 8.45.13 | 5333,49 | 8561,21 | 345,35 |
| 24 | **12160** | 16/12/2008 8.45.13 | 4947,14 | 7760,61 | 804,42 |
| 25 | **51213** | 16/12/2008 8.45.13 | 4587,44 | 2736,30 | 87,41 |
| 26 | **51832** | 16/12/2008 8.45.13 | 3279,03 | 8419,11 | 747,05 |
| 27 | **51998** | 16/12/2008 8.45.13 | 5027,35 | 3290,84 | 925,62 |
| 28 | **54364** | 16/12/2008 8.45.13 | 6235,67 | 3556,63 | 294,28 |
| 29 | **56030** | 16/12/2008 8.45.13 | 8522,83 | 4809,35 | 948,79 |
| 30 | **56277** | 16/12/2008 8.45.13 | 2532,76 | 5457,53 | 668,57 |
| 31 | **59053** | 16/12/2008 8.45.13 | 4183,73 | 9350,81 | 527,37 |
| 32 | **59087** | 16/12/2008 8.45.13 | 4223,78 | 4812,03 | 871,99 |

.....

Fig. 14

ORDER GENERATION – phase 6 of 11- OPTIMIZATION PARAMETERS

Step 0 – Initialization of optimization system input

| | |
|---|---|
| Optimization horizon (days) | 7 |
| Dispended quantity evaluation period (weeks)) | 8 |

Esegui

Fig.15

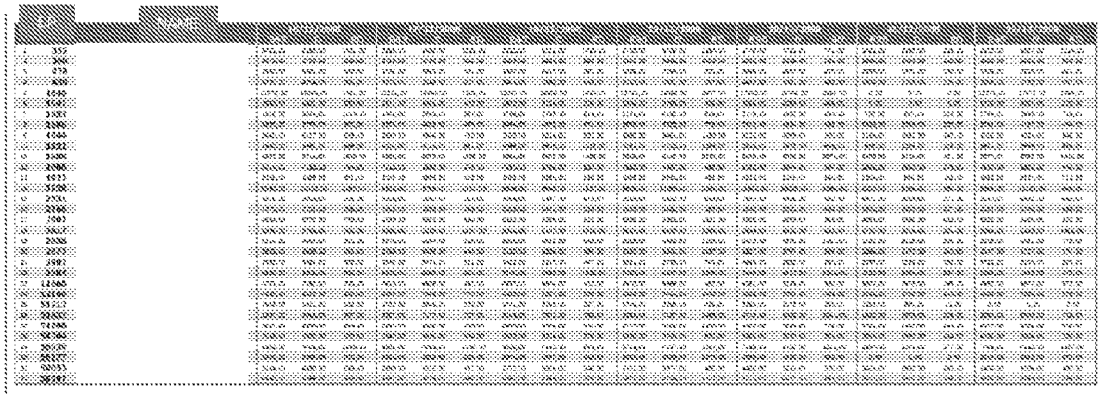

Fig.16

Forecast/estimated orders of PULL sales points

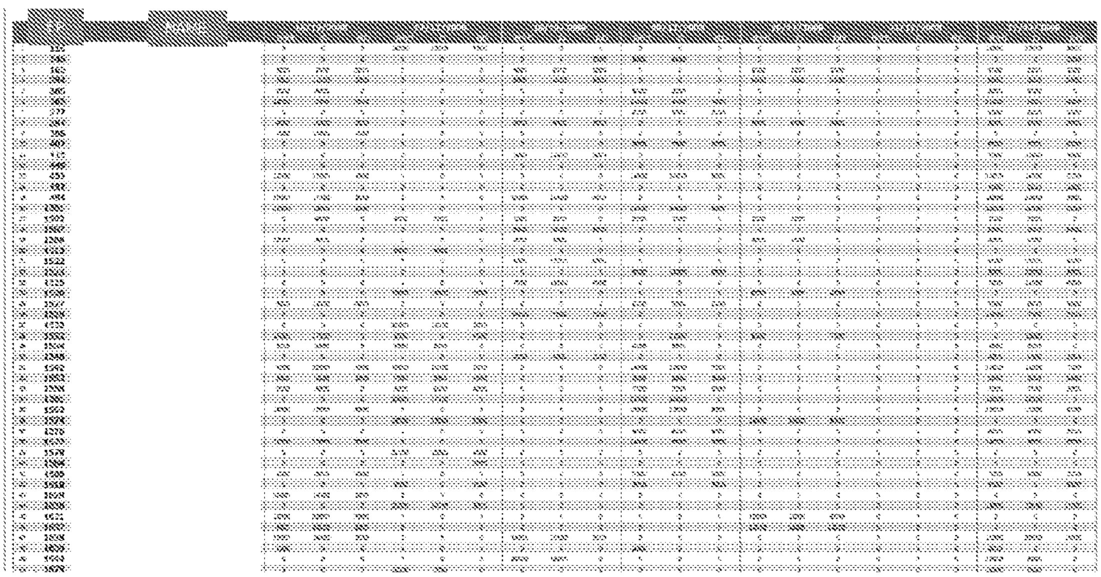

Fig.17

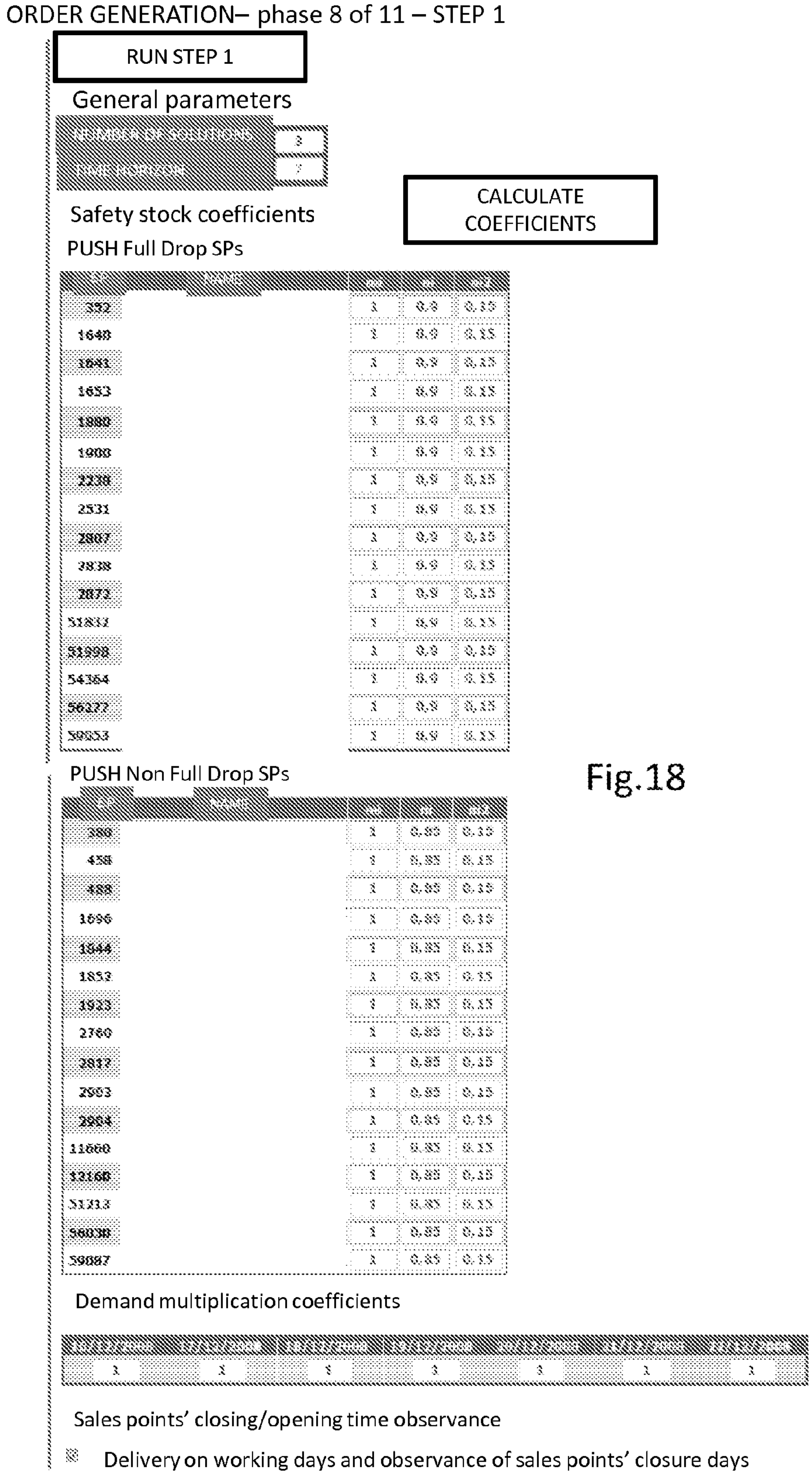
ORDER GENERATION– phase 8 of 11 – STEP 1
RUN STEP 1
General parameters
NUMBER OF SOLUTIONS
TIME HORIZON
Safety stock coefficients
CALCULATE COEFFICIENTS
PUSH Full Drop SPs
PUSH Non Full Drop SPs
Demand multiplication coefficients
Sales points' closing/opening time observance
Delivery on working days and observance of sales points' closure days

Fig.18

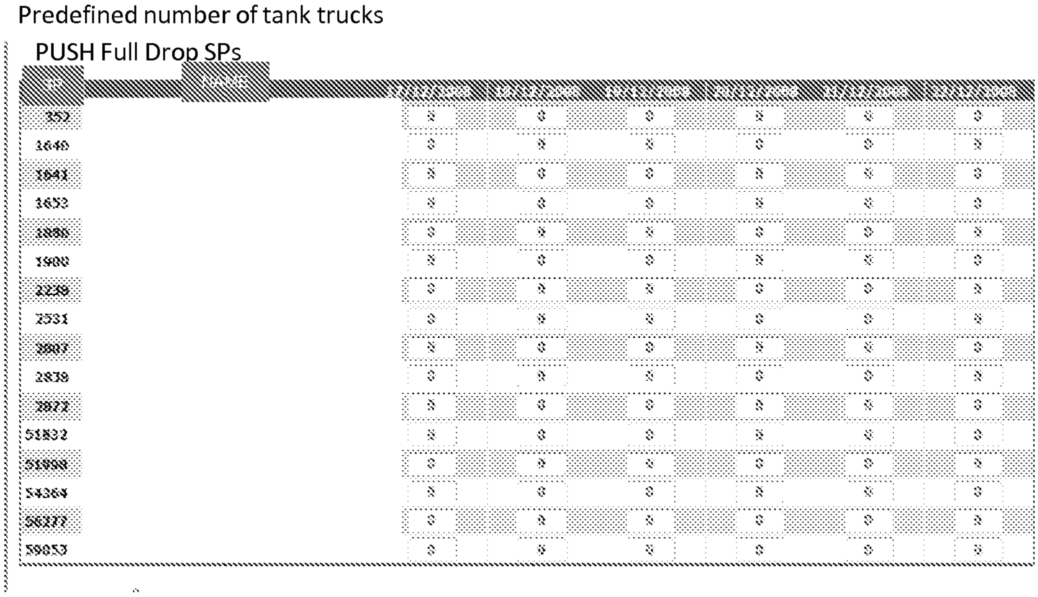
Predefined number of tank trucks
PUSH Full Drop SPs

Fig. 19

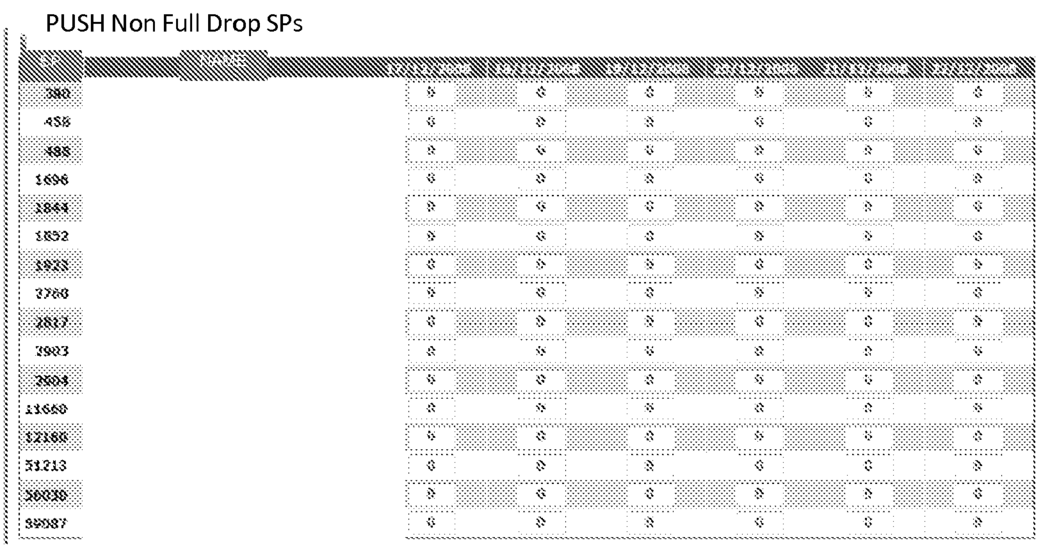
PUSH Non Full Drop SPs

Fig. 20

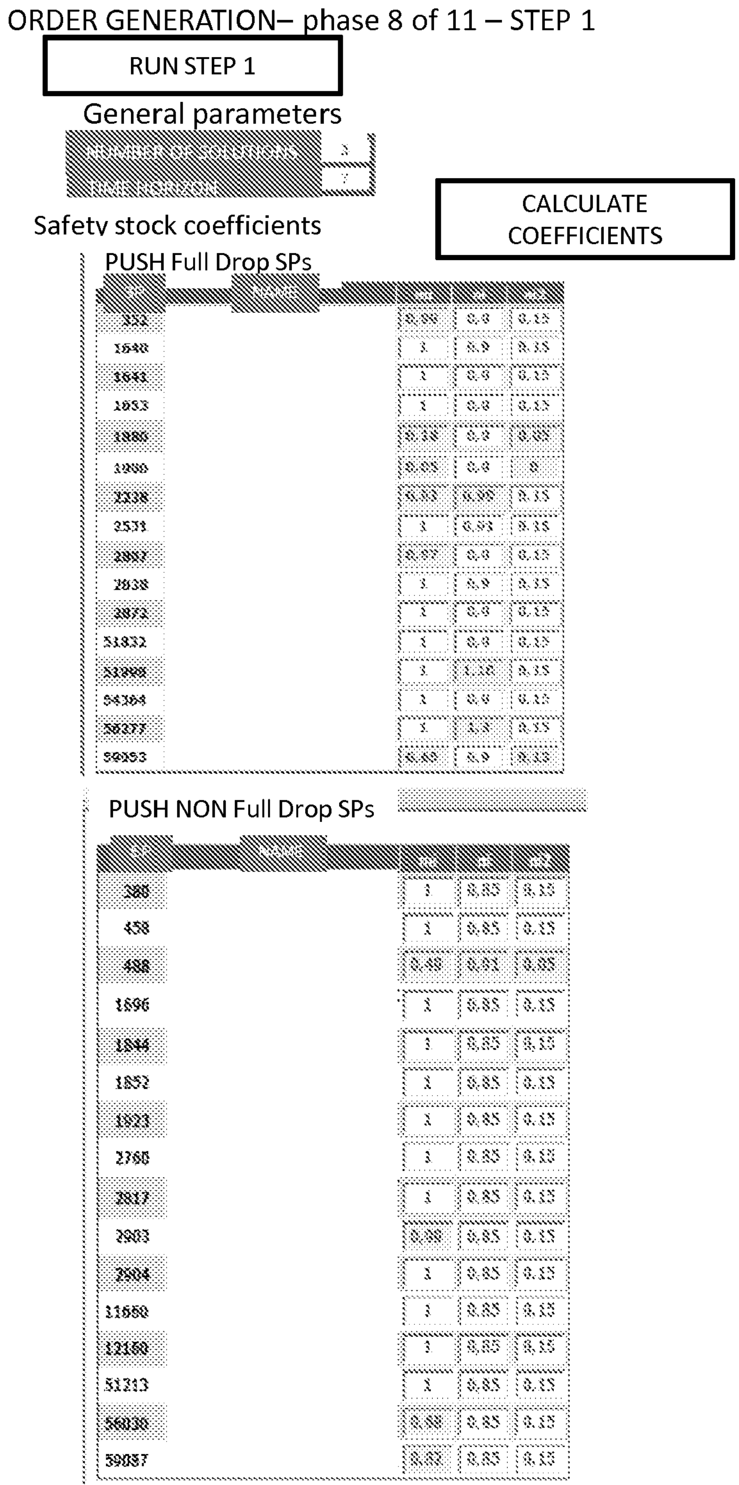
ORDER GENERATION– phase 8 of 11 – STEP 1
RUN STEP 1
General parameters
CALCULATE COEFFICIENTS
Safety stock coefficients
PUSH Full Drop SPs
PUSH NON Full Drop SPs

Fig. 21

ORDER GENERATION– phase 9 of 11 – SOLUTIONS OF STEP 1

SOLUTION 1

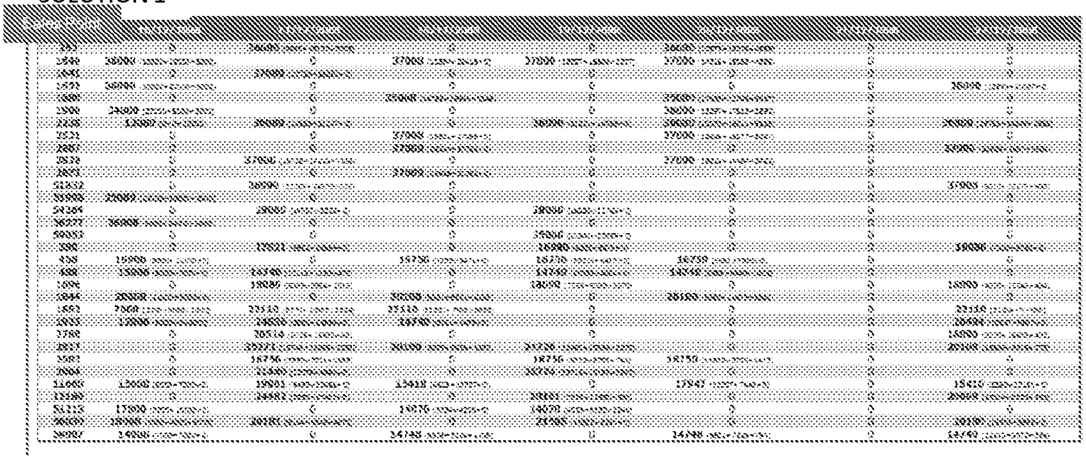

SOLUTION 2

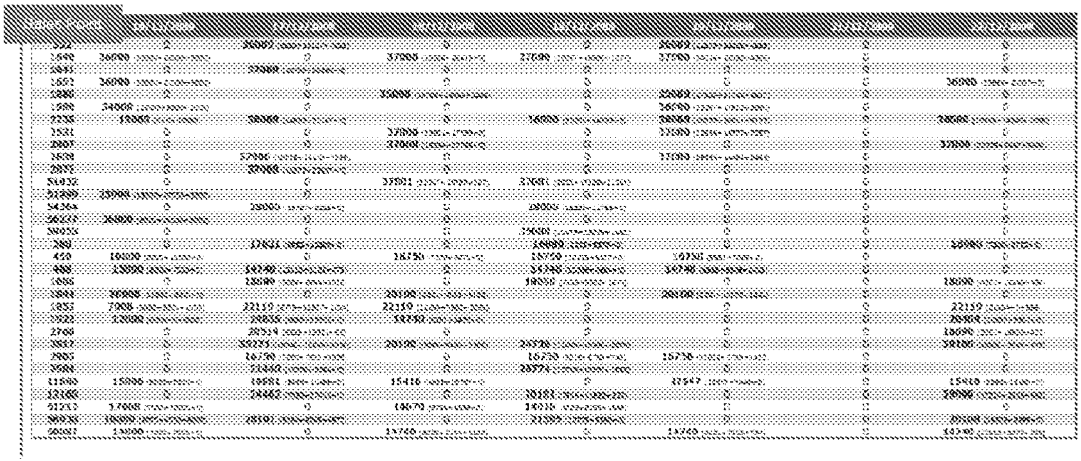

SOLUTION 3

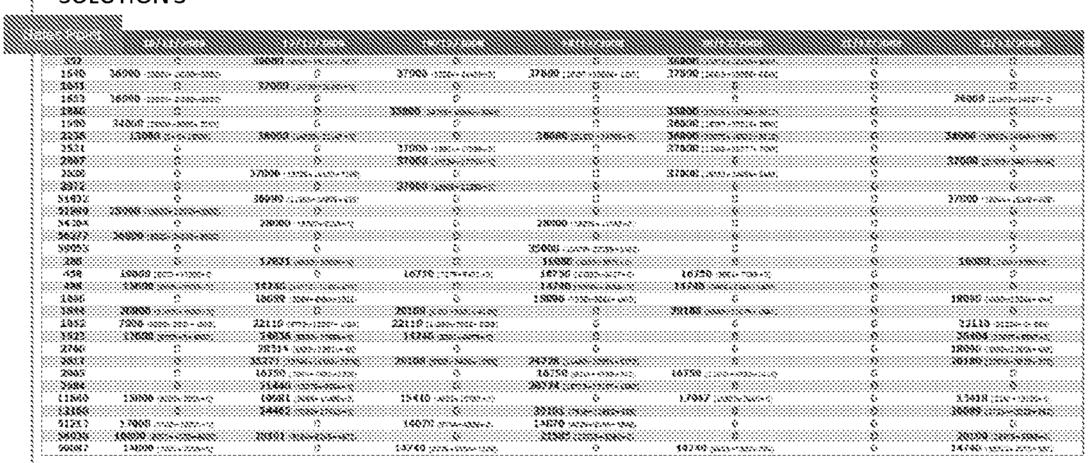

Fig. 22

ORDER GENERATION– phase 10 of 11 –STEP 2

Step 2 – Parameter entry and selection of the optimal solutions to the problem

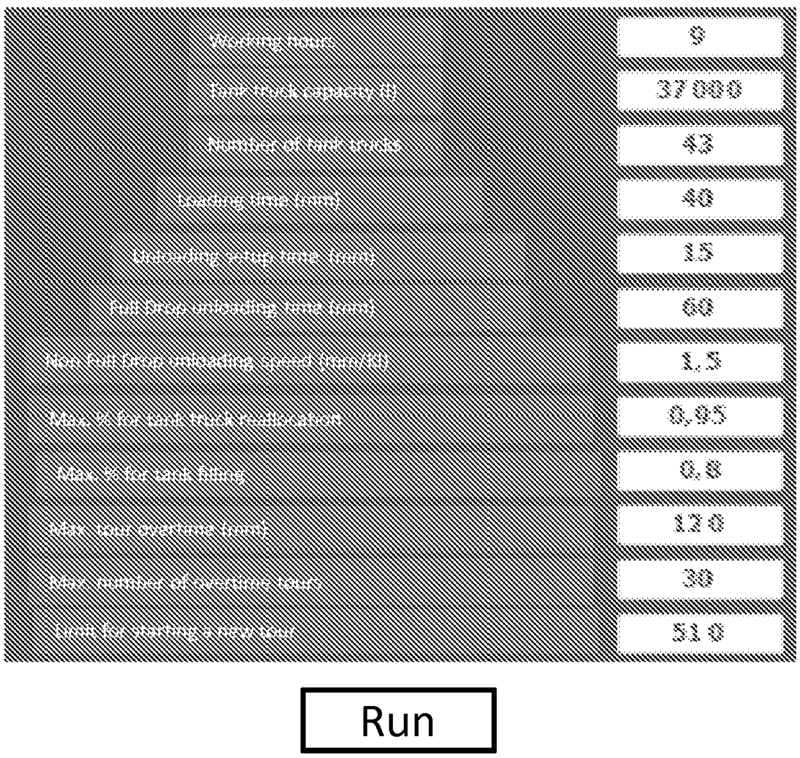


Fig. 23

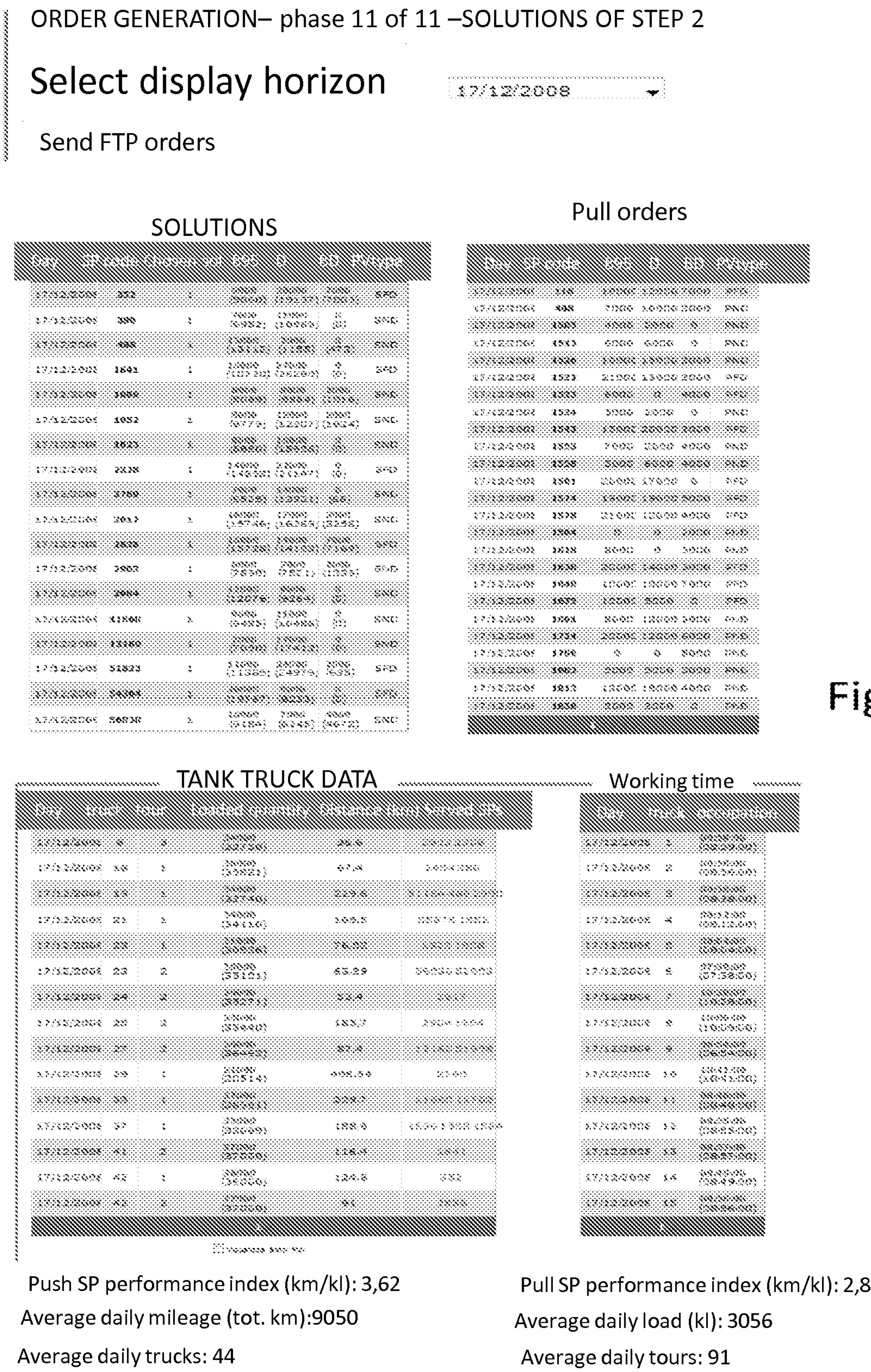
ORDER GENERATION– phase 11 of 11 –SOLUTIONS OF STEP 2
Select display horizon
17/12/2008
Send FTP orders
SOLUTIONS
Pull orders
TANK TRUCK DATA
Working time
Push SP performance index (km/kl): 3,62
Average daily mileage (tot. km):9050
Average daily trucks: 44
Pull SP performance index (km/kl): 2,8
Average daily load (kl): 3056
Average daily tours: 91

Fig.24

Planning executed on 16/12/2008 at 10:55

Orders of 17/12/2008

| SP | Name | DVS | B | BD |
|---|---|---|---|---|
| 352 | | 9000 | 20000 | 7000 |
| 380 | | 7000 | 11000 | 0 |
| 488 | | 13000 | 2000 | 0 |
| 1641 | | 10000 | 27000 | 0 |
| 1696 | | 8000 | 8000 | 2000 |
| 1852 | | 8000 | 12000 | 2000 |
| 1923 | | 9000 | 16000 | 0 |
| 2238 | | 14000 | 22000 | 0 |
| 2760 | | 7000 | 14000 | 0 |
| 2817 | | 16000 | 17000 | 3000 |
| 2838 | | 16000 | 14000 | 7000 |
| 2903 | | 8000 | 7000 | 2000 |
| 2904 | | 12000 | 9000 | 0 |
| 11660 | | 9000 | 11000 | 0 |
| 12160 | | 7000 | 17000 | 0 |
| 51832 | | 11000 | 24000 | 2000 |
| 54364 | | 20000 | 8000 | 0 |
| 56030 | | 10000 | 7000 | 4000 |

Fig. 25

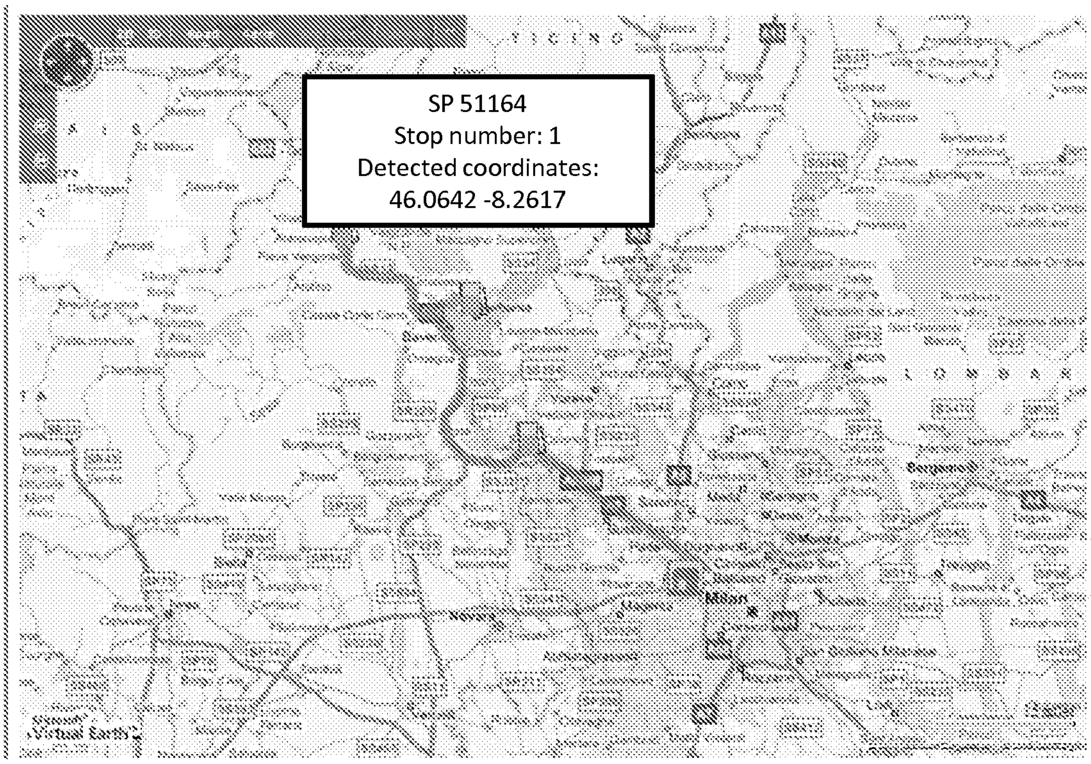


Fig. 26

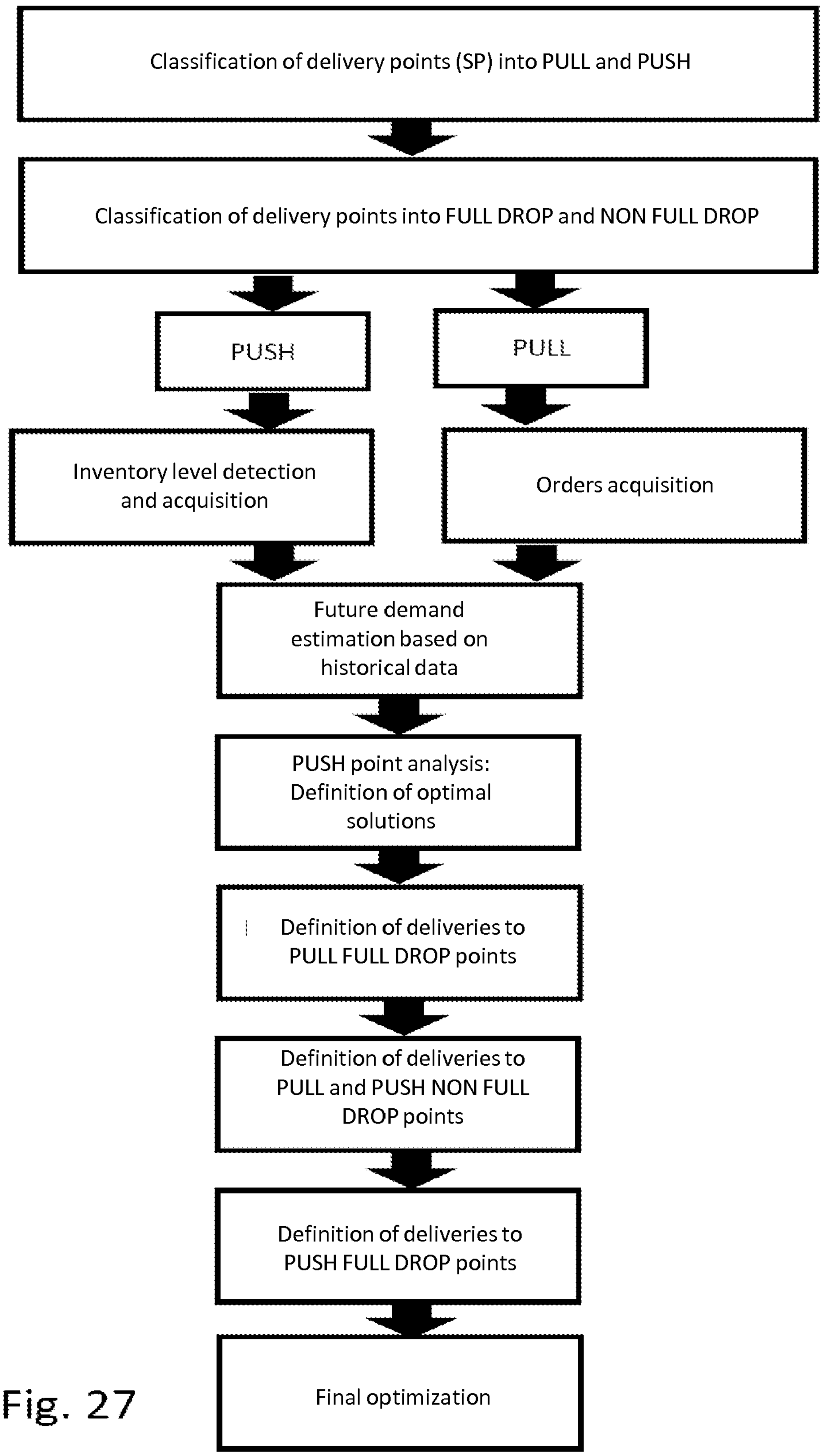
Classification of delivery points (SP) into PULL and PUSH
Classification of delivery points into FULL DROP and NON FULL DROP
PUSH
PULL
Inventory level detection and acquisition
Orders acquisition
Future demand estimation based on historical data
PUSH point analysis: Definition of optimal solutions
Definition of deliveries to PULL FULL DROP points
Definition of deliveries to PULL and PUSH NON FULL DROP points
Definition of deliveries to PUSH FULL DROP points
Final optimization

Fig. 27

Europäisches Patentamt
European Patent Office
Office européen des brevets

# EUROPEAN SEARCH REPORT

Application Number
EP 10 15 9688

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/246192 A1 (JAUFFRED FRANCISCO [US] ET AL) 3 November 2005 (2005-11-03)<br>* abstract *<br>* paragraphs [0006] - [0032] *<br>----- | 1-6 | INV.<br>G06Q10/00 |
| | | | TECHNICAL FIELDS SEARCHED (IPC) |
| | | | G06Q |

2

The present search report has been drawn up for all claims

| Place of search | Date of completion of the search | Examiner |
|---|---|---|
| Munich | 27 May 2010 | Falò, Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 10 15 9688

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2010

| Patent document cited in search report | Publication date | Patent family member(s) | Publication date |
|---|---|---|---|
| US 2005246192 A1 | 03-11-2005 | AU 2005223680 A1 | 29-09-2005 |
| | | BR PI0508991 A | 28-08-2007 |
| | | CA 2560271 A1 | 29-09-2005 |
| | | EP 1751705 A2 | 14-02-2007 |
| | | WO 2005089474 A2 | 29-09-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- Deterministic order-up-to level policies in an inventory routing problem. *Transportation Science journal,* 2002, vol. 36
- A decomposition approach for the inventory-routing problem. *Transportation Science journal,* 2004, vol. 38